# FASCICULE DE BREVET EUROPEEN

(11) **EP 4 560 427 B1**
(45) Date de publication et mention de la délivrance du brevet: **20.05.2026**
(21) Numéro de dépôt: 24214412.9
(22) Date de dépôt: 21.11.2024
(51) Int. Cl.: G05D 1/644, G05D 1/689, G05D 1/69, G05D 105/80, G05D 109/25, G06Q 10/04, G01C 21/20, G06Q 10/047, G06Q 10/0631

(54) **PROCÉDÉ ET DISPOSITIF D'ATTRIBUTION DE MISSION À CHAQUE DRONE D'UNE PLURALITÉ DE DRONES**
VERFAHREN UND VORRICHTUNG ZUR ZUWEISUNG VON MISSIONEN AN JEDE DROHNE EINER VIELZAHL VON DROHNEN
METHOD AND DEVICE FOR ASSIGNING MISSION TO EACH DRONE OF PLURALITY OF DRONES

(30) Priorité: 22.11.2023 FR 2312864
(43) Date de publication de la demande: 28.05.2025
(73) Titulaire: THALES, 92190 Meudon (FR)
(72) Inventeur: DUQUEROIE, Bertrand, 91767 Palaiseau Cedex (FR); KAZMIEROWSKI, Alexandre, 91767 Palaiseau Cedex (FR); CLAVAUD, Antoine, 91120 Palaiseau (FR)
(74) Mandataire: Lavoix

(56) Documents cités:
- CN-A- 114 200 964
- CN-A- 116 339 368
- CN-B- 111 984 033
- FR-A1- 2 213 738
- US-A1- 2018 120 846
- US-A1- 2018 231 972
- KUMAR KRISHAN ET AL: "Region coverage-aware path planning for unmanned aerial vehicles: A systematic review", PHYSICAL COMMUNICATION, ELSEVIER, AMSTERDAM, NL, vol. 59, 18 April 2023 (2023-04-18), XP087354637, ISSN: 1874-4907, [retrieved on 20230418], DOI: 10.1016/J.PHYCOM.2023.102073
- BOYU ZHOU ET AL: "RACER: Rapid Collaborative Exploration with a Decentralized Multi-UAV System", ARXIV.ORG, CORNELL UNIVERSITY LIBRARY, 201 OLIN LIBRARY CORNELL UNIVERSITY ITHACA, NY 14853, 18 September 2022 (2022-09-18), XP091322044
- ROBERGE VINCENT ET AL: "Multiunmanned Aerial Vehicle Path Planner on Graphics Processing Unit", IEEE CANADIAN JOURNAL OF ELECTRICAL AND COMPUTER ENGINEERING, IEEE, vol. 44, no. 3, 27 July 2021 (2021-07-27), pages 364 - 375, XP011869938, DOI: 10.1109/ICJECE.2021.3088294

## Description

La présente invention concerne un procédé d'attribution de mission à chaque drone d'une pluralité de drones chaque drone étant muni d'au moins un capteur d'image dont l'orientation et/ou le zoom est pilotable, la mission de la pluralité de drones étant d'explorer à distance une pluralité de points d'intérêt prédéterminés au sein d'une zone géographique prédéterminée, le procédé étant mis en œuvre par un dispositif électronique d'attribution de mission à chaque drone d'une pluralité de drones.

La présente invention concerne également un dispositif électronique d'attribution de mission à chaque drone d'une pluralité de drones configuré pour mettre en œuvre un tel procédé.

L'observation par drone de grandes zones géographiques prédéterminées implique souvent un très grand nombre de prises de vue pour un seul drone. Cela est souvent chronophage. En utilisant plusieurs drones en parallèle, le temps pour observer chaque zone parmi les zones prédéterminées est réduit.

Le document CN 116 339 368 A porte notamment sur le contrôle intelligent du retour à domicile d'équipements autonomes.

Toutefois, souvent la coordination d'une pluralité de drones (i.e. essaim de drones) est complexe et difficile à mettre en œuvre par un opérateur.

Le domaine de l'invention porte donc sur la coordination efficace de plusieurs drones ou essaim de drones, notamment des drones aériens UAV (de l'anglais *Unmanned Aerial Vehicle* pour « aéronef sans équipage »), potentiellement hétérogènes, et de leur moyen de détection comprenant notamment une caméra avec pilotage de l'orientation et/ou du zoom du capteur d'image, en vue d'observer successivement et en parallèle un ensemble de points (i.e. d'éléments) d'intérêt, tels qu'une route, une lisière de forêt, des pourtours de bâtiments, etc. dans une zone géographique prédéterminée et/ou pour combler un manque d'observation effectué par d'autres moyens de détection externes à l'essaim (type image satellite, avion de reconnaissance haute altitude, véhicules au sol).

Plus précisément, on cherche à observer efficacement les points d'intérêts, à savoir le plus rapidement possible, avec potentiellement plusieurs prises de vue, notamment partiellement orthogonales, et avec des capacités d'adaptation pour prendre en charge un changement de la zone à inspecter en cours de mission, la prise en compte de zone(s) dont le survol est interdit (de l'anglais *No Fly Zones*) durant la mission, la prise en compte de priorité d'observation de certains points (i.e. éléments) d'intérêt ou de type de points d'intérêt, potentiellement durant la mission, ou encore la prise en compte d'un changement du nombre de drones disponibles durant la mission, en particulier, lors de la mise en œuvre d'un roulement au sein de l'essaim de drones pour la gestion de leur autonomie énergétique.

Par observation efficace, on entend également une observation de manière exhaustive (i.e. de tous les points d'intérêt), ou alternativement, de manière partiellement exhaustive, avec 90% de la surface à observer comme seuil par exemple, si cela apporte un gain notable sur la durée totale d'observation de la zone.

Il est à noter que l'essaim de drones est généralement, pour les besoins de la mission, couplé à un système d'analyse vidéo (de l'anglais *Video Analytics*) propre à mettre en œuvre une détection automatique d'objets d'intérêt dans la ou les images captées par le ou les capteurs d'image de chaque drone, le système étant configuré pour lever des alertes lorsqu'il détecte des objets d'intérêt, typiquement des êtres humains dans un contexte de recherche et sauvetage (de l'anglais *Search & Rescue*)
Toutefois, lorsque la taille du terrain de mission est grande, typiquement supérieure à 1km², certaines solutions d'optimisation de contrôle de l'essaim de drone ne passent pas à l'échelle, c'est-à-dire n'ont pas la capacité de calculs quasi-instantanés pour un grand nombre de point d'intérêts à observer.

Typiquement, lorsque le contrôle individuel des drones, portant sur leur position géographique et l'orientation du capteur d'image embarqué, est réalisé par un réseau de neurones, dans le cadre d'un apprentissage par renforcement, tel que notamment mis en œuvre selon la demande de brevet dont le numéro de dépôt est FR 2213738 publiée en tant que FR3143552 au nom de la Demanderesse, la taille de l'espace d'état du réseau de neurones est limitée. Autrement dit, le réseau de neurones ne perçoit pas tout l'environnement de la zone de mission dont la taille est grande, typiquement supérieure à 1km², mais seulement une sous-partie.

Dans ce contexte de contrôle individuel des drones réalisé au moyen d'un réseau de neurones, dans le cadre d'un apprentissage par renforcement, pour l'observation d'une zone dont la surface est supérieure à celle propre à être prise en charge par le réseau de neurones dont la taille de l'espace d'état est limité, il est donc classiquement proposé de procéder par déplacement d'un nombre prédéterminé de fenêtres glissantes dont la taille est propre à être prise en charge par le réseau de neurones dont la taille de l'espace d'état est limité (i.e. la taille de chaque fenêtre glissante est de taille suffisamment petite pour être totalement incluse dans l'espace d'état d'un réseau de neurones).

Le problème que l'on cherche à résoudre est donc d'optimiser, pour chaque drone le déplacement de ces fenêtres glissantes, en trouvant la suite de déplacements la plus rapide en temps de parcours, permettant d'observer à distance un ensemble de points d'intérêts potentiellement en très grand nombre.

Le problème classique qui s'apparente le plus à celui ci-dessus que l'on cherche à résoudre est celui concernant l'optimisation d'une distance de parcours connue sous le nom du problème du voyageur de commerce TSP (de l'anglais *Travelling salesman problem*)*.* Ce problème permet de déterminer une distance minimale entre une pluralité de villes, tout en visitant chaque ville une fois. Lorsque plusieurs agents se déplacent entre les villes, le problème est appelé problème du voyageur de commerce multiple MTSP (de l'anglais *Multiple Traveling Salesman Problem*)*.*

Toutefois, la formulation MTSP du problème ne prend pas en compte la possibilité de chaque drone d'observer à distance des points d'intérêt si bien qu'il n'est pas nécessaire d'être présent au-dessus d'un point d'intérêt pour l'observer. Au contraire, il peut être plus rapide de se placer entre deux points et de changer l'orientation du capteur d'image de la caméra sans se déplacer, plutôt que de se déplacer successivement au-dessus des deux points d'intérêts.

Par ailleurs, il est important de noter que l'ensemble des points d'intérêt à observer, et donc leurs positions, est connu à l'avance d'une part, et que c'est un sous-ensemble de la zone globale de la mission. Par conséquent, toutes les solutions techniques classiques qui traitent de la découverte de l'environnement en cours de mission, tel que la solution portant sur une localisation et une cartographie simultanées SLAM (de l'anglais *simultaneous localization and mapping*) ou tout autre solution de découverte d'environnement, sont hors de propos, de même que les techniques de balayages systématiques d'une surface entière de type « robots tondeuses » ou « aspirateurs ».

Autrement dit, les solutions actuelles sont impropres à prendre à la fois la capacité de vision à distance des drones et le besoin de passage à l'échelle correspondant à une capacité de calculs quasi-instantanés pour un grand nombre de point d'intérêts à observer, l'ordre de grandeur du nombre de point d'intérêts à observer étant par exemple, pour une surface de 10km², discrétisée en fenêtre (i.e. cellule) de 10m², pour laquelle on a 30% de la surface à explorer (i.e. seuls 30% des points de la fenêtre sont des points d'intérêt à observer) de 300 000 points à explorer.

Un but de la présente invention est ainsi d'optimiser l'affectation de fenêtre(s) d'observation à chaque drone d'une pluralité de drones contrôlés individuellement au moyen d'un réseau de neurones, dans le cadre d'un apprentissage par renforcement, et ce en considérant que seule une sous-partie connue a priori, à savoir les points d'intérêt, de la zone de mission est à observer, en tenant compte de la capacité de vision à distance de chaque drone, et en étant capable de passer à l'échelle, c'est-à-dire de prendre en compte de manière quasi-instantanée le nombre de points d'intérêt à observer.

A cet effet, l'invention a pour objet un procédé d'attribution de mission à chaque drone d'une pluralité de drones contrôlés individuellement au moyen d'un réseau de neurones, chaque drone étant muni d'au moins un capteur d'image dont l'orientation et/ou le zoom est pilotable, la mission de la pluralité de drones étant d'explorer à distance une pluralité de points d'intérêt prédéterminés au sein d'une zone géographique prédéterminée, le procédé étant mis en œuvre par un dispositif électronique d'attribution de mission à chaque drone d'une pluralité de drones, le procédé comprenant au moins les étapes suivantes :
- obtention d'un modèle numérique du terrain associé à ladite zone géographique prédéterminée et de la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée;
- partitionnement dudit sous-ensemble en groupes d'exploration regroupant des points d'intérêt voisins en étant espacés les uns des autres d'une distance inférieure à un seuil de distance prédéterminé, chaque groupe étant de taille sensiblement égale;
- en fonction de la position courante de chacun desdits drones, attribution à chacun desdits drones d'une liste de groupe(s) d'exploration à parcourir, ladite liste comprenant au moins un desdits groupes d'exploration ;
- pour chacun desdits drones, détermination d'un ordre de parcours desdits groupes d'exploration attribués lorsque ladite liste comprend au moins deux desdits groupes d'exploration dudit sous-ensemble partitionné ;
et les étapes suivantes mises en œuvre itérativement au cours de ladite mission jusqu'à ce que ledit sous-ensemble soit complètement exploré :
- suivi, en parallèle, de la position et du parcours de chacun desdits drones, jusqu'à détection, d'au moins un des évènements suivants:
   - selon un critère prédéterminé, d'une suffisance d'exploration d'au moins un groupe d'exploration attribué courant ;
   - changement d'une priorité d'exploration d'au moins un desdits points d'intérêt ;
   - ajout ou suppression d'un drone à ladite pluralité;
- au moins après chaque détection, mise à jour de la liste de groupe(s) d'exploration restant à parcourir attribuée à chaque drone en supprimant de ladite liste tout groupe d'exploration suffisamment exploré, ou
   - lors d'un ajout ou d'une suppression de drone ou d'un changement de priorité d'exploration, réitération de l'ensemble des étapes à partir de l'étape de partitionnement appliquée à la partie non explorée dudit sous-ensemble.

Le procédé proposé selon la présente invention permet ainsi d'accomplir la mission d'observation le plus rapidement possible, car elle se focalise sur la seule sous-partie connue a priori de l'environnement à observer, à savoir les point d'intérêt, et ce en tenant compte de la capacité de vision à distance de chaque drone, avec un passage à l'échelle sur un nombre de points d'intérêts à observer très élevé, et en étant applicable au problème du voyageur de commerce multiple.

En effet, selon la présente invention, tel un prérequis, un modèle numérique de terrain préexiste, et les positions des éléments (i.e. points) d'intérêt sont donc connues à l'avance. Ces éléments d'intérêt forment un sous-ensemble à observer de la surface i.e. (zone) de mission. Ce sous-ensemble d'éléments d'intérêts correspond au sein de l'image de la zone de mission à un sous-ensemble de pixels.

Après chargement du modèle numérique du terrain que les drones doivent explorer, le procédé selon la présente invention propose ensuite de découper le sous-ensemble des points d'intérêt/pixels à visiter en des groupes d'exploration (i.e. en anglais des clusters) de taille semblables qui regroupent des points d'intérêt proches entre eux, et de les attribuer, au moins partiellement, sous forme de liste, à chaque drone de l'essaim de drones affecté à la mission, en déterminant en outre pour chaque drone ordre de parcours desdits groupes d'exploration attribués lorsque ladite liste comprend au moins deux desdits groupes d'exploration dudit sous-ensemble partitionné.

La mission est ensuite lancée et une deuxième phase du procédé commence. Il s'agit d'une actualisation quasi permanente des listes de clusters à explorer attribuées à chaque drone. Cette actualisation, basée sur la décision de considérer un groupe d'exploration (i.e. une fenêtre d'exploration) comme explorée et passer au groupe suivant, est propre à tenir compte d'une multitude de facteurs afin d'équilibrer la charge de travail de chaque drone tout en garantissant un certain niveau d'efficacité de la solution fournie.

Suivant d'autres aspects avantageux de l'invention, le procédé comprend une ou plusieurs des caractéristiques suivantes, prises isolément ou suivant toutes les combinaisons techniquement possibles :
- ledit partitionnement dudit sous-ensemble en groupes d'exploration est un partitionnement en k-moyennes, le nombre optimal de groupes d'exploration étant déterminé en :
   - testant en parallèle plusieurs valeurs du nombre de groupes d'exploration,
   - en sommant, pour chaque valeur du nombre de groupes d'exploration, la surface de l'enveloppe convexe associée à chaque groupe d'exploration, le nombre optimal correspondant à la valeur fournissant la surface totale minimale ;
- ledit partitionnement dudit sous-ensemble en groupes d'exploration est obtenu par tuilage par programmation linéaire :
- ledit partitionnement dudit sous-ensemble en groupes d'exploration est obtenu en appliquant une heuristique de tuilage prédéterminée, chaque groupe d'exploration correspondant à une tuile dudit tuilage, l'application de ladite heuristique de tuilage comprenant les premières étapes suivantes :
   - placement d'une première tuile de forme prédéterminée dans un coin arbitraire de ladite image, et
   - obtention de la position définitive de ladite première tuile au sein de l'image par :
      - décalage selon une première des directions de la grille bidimensionnelle tant qu'aucun pixel correspondant à un desdits points d'intérêt n'est en dehors de ladite première tuile, puis par
      - décalage selon l'autre des directions de la grille bidimensionnelle tant qu'aucun pixel correspondant à un desdits points d'intérêt n'est en dehors de ladite première tuile ; les points d'intérêt couverts par la première tuile n'étant plus à prendre en compte pour la détermination de la position des tuiles suivantes ;
   et, jusqu'à couverture de chacun des desdits points d'intérêt de ladite pluralité, la réitération des étapes suivantes :
   - placement d'une autre tuile de ladite forme prédéterminée :
      - directement à la suite de la tuile dont la position définitive a été précédemment obtenue selon ladite première direction, ou,
      - selon ladite autre direction :
         - au début de la ligne suivante celle de la tuile dont la position définitive a été précédemment obtenue, si ladite autre direction est horizontale, ou
         - de la colonne suivante celle de la tuile dont la position définitive a été précédemment obtenue, si ladite autre direction est horizontale, et
   - obtention de la position définitive de ladite autre tuile au sein de l'image par :
      - décalage selon ladite première direction tant qu'aucun pixel correspondant à un desdits points d'intérêt n'est en dehors de ladite autre tuile, puis par
      - décalage selon ladite autre direction tant qu'aucun pixel correspondant à un desdits points d'intérêt n'est en dehors de ladite autre tuile ;
      les points d'intérêt couverts par ladite autre tuile n'étant plus à prendre en compte pour la détermination de la position des tuiles suivantes ;
- ledit procédé comprend en outre l'obtention d'une priorité d'exploration d'au moins un desdits points d'intérêt, et sa prise en compte lors de ladite attribution,
ladite attribution comprenant l'ensemble des sous-étapes suivantes :
- calcul de la surface de l'enveloppe convexe associée à chaque groupe d'exploration ;
- première attribution, à ladite pluralité de drones, de tous les groupes d'exploration comprenant au moins un point d'intérêt à explorer prioritairement et/ou du groupe d'exploration le plus proche ;
- détermination du drone ayant le moins de surface à explorer correspondant au drone dont la liste de groupe(s) d'exploration à parcourir présente la somme minimale des surfaces des enveloppes convexes desdits groupes d'exploration qui lui ont été attribués lors de ladite première attribution
- pour chaque groupe d'exploration non attribué dudit sous-ensemble partitionné, détermination d'un score comprenant :
   - la détermination d'une première distance correspondant à la distance minimale dudit groupe d'exploration non attribué auxdits groupes d'exploration attribués audit drone ayant le moins de surface à explorer ;
   - la détermination d'une deuxième distance correspondant à la distance minimale dudit groupe d'exploration non attribué auxdits groupes d'exploration attribués aux autres drones de ladite pluralité distincts dudit drone ayant le moins de surface à explorer ;
   - la détermination du score correspondant à la différence entre lesdites première et deuxième distances ;
- jusqu'à ce que la somme des surfaces des enveloppes convexes desdits groupes d'exploration attribués à chaque drone soit sensiblement égale ou jusqu'à ce que tous lesdits groupes d'exploration issus du partitionnement soient attribués, deuxième attribution de groupes d'exploration non attribués lors de ladite première attribution, le drone ayant le moins de surface à explorer se voyant attribué le groupe d'exploration non attribués présentant le score le plus faible.

- la détermination dudit ordre de parcours comprend l'optimisation de la distance de parcours débutant à la position courante dudit drone considéré et passant par l'intégralité desdits groupes d'exploration qui lui sont attribués en résolvant, au moyen d'un algorithme 3-opt, un problème correspondant sensiblement au problème du voyageur de commerce ou du voyageur de commerce multiple,
et en considérant un nombre limite prédéterminé de groupes d'exploration attribués, ledit ordre de parcours étant ré-optimisé via ledit algorithme 3-opt dès qu'un de ses groupes d'exploration attribué est suffisamment exploré, en ajoutant le groupe d'exploration attribué le plus proche du dernier des groupes d'exploration attribué appartenant au nombre limite prédéterminé de groupes d'exploration attribués lors de l'itération précédente de l'algorithme 3-opt.
- ladite mise à jour comprend en outre une réattribution desdits groupes d'exploration restant à parcourir lorsque la liste mise à jour d'au moins un desdits drones est vide, ladite réattribution correspondant au moins à l'attribution, audit drone dont la liste est vide, d'au moins un groupe d'exploration restant à parcourir attribué au drone ayant le plus de surface restante à explorer, ledit au moins un groupe d'exploration restant à parcourir réattribué étant le plus éloigné ou le dernier à visiter selon l'ordre de parcours dudit drone ayant le plus de surface restante à explorer.
- ladite attribution comprend l'ensemble des sous-étapes suivantes :
   - calcul de l'enveloppe convexe de tous les groupes d'exploration dudit sous-ensemble partitionné ;
   - pour chacun desdits drones :
      - détermination du sommet de l'enveloppe convexe le plus proche dudit drone considéré ;
      - détermination des groupes d'exploration dudit sous-ensemble partitionné les plus proches dudit sommet,
      - parmi lesdits groupes d'exploration dudit sous-ensemble partitionné les plus proches dudit sommet, détermination dudit groupe d'exploration le plus proche dudit drone considéré ;
      - attribution dudit groupe d'exploration le plus proche audit drone considéré.
- ledit critère prédéterminé dépend, pour chaque groupe d'exploration, au moins des éléments suivants :
   - la densité de pixels à explorer correspondant à la proportion de pixels à explorer, chaque pixel à explorer correspondant à un point d'intérêt à explorer, parmi l'ensemble des pixels constituant le groupe d'exploration courant ;
   - le taux d'exploration correspondant à la proportion de pixels déjà explorés parmi l'ensemble des pixels à explorer du groupe d'exploration courant ;
   - la dérivée du taux d'exploration ;
   une pluralité de plages de densité de pixels distinctes étant définie, chaque plage de densité de pixels étant respectivement associée à un couple de seuils comprenant un seuil de taux d'exploration et à un seuil de dérivée dudit taux d'exploration ;
pour la plage de densité du groupe d'exploration courant, la suffisance d'exploration étant obtenue lorsque le taux d'exploration est supérieur audit seuil de taux d'exploration dudit couple associé à ladite plage de densité et lorsque le taux d'exploration est inférieur au seuil de dérivée dudit taux d'exploration.

L'invention concerne également un dispositif électronique d'attribution de mission à chaque drone d'une pluralité de drones contrôlés individuellement au moyen d'un réseau de neurones, chaque drone étant muni d'au moins un capteur d'image dont l'orientation et/ou le zoom est pilotable, la mission de la pluralité de drone étant d'explorer à distance une pluralité de points d'intérêt prédéterminés au sein d'une zone géographique prédéterminée, le dispositif électronique d'attribution de mission à chaque drone d'une pluralité de drones comprenant au moins :
- un module d'obtention configuré pour obtenir un modèle numérique du terrain associé à ladite zone géographique prédéterminée et la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée ;
- un module de partitionnement configuré pour partitionner ledit sous-ensemble en groupes d'exploration regroupant des points d'intérêt voisins en étant espacés les uns des autres d'une distance inférieure à un seuil de distance prédéterminé, chaque groupe étant de taille sensiblement égale ;
- un module d'attribution configuré pour allouer à chacun desdits drones une liste de groupe(s) d'exploration à parcourir en fonction de la position courante de chacun desdits drones, ladite liste comprenant au moins un desdits groupes d'exploration dudit sous-ensemble partitionné ;
- un module de détermination configuré, pour chacun desdits drones, pour déterminer un ordre de parcours desdits groupes d'exploration attribués lorsque ladite liste comprend au moins deux desdits groupes d'exploration ;
et les modules suivants, mis en œuvre itérativement au cours de ladite mission jusqu'à ce que ledit sous-ensemble soit complètement exploré :
- un module de suivi configuré pour suivre en parallèle la position et le parcours de chacun desdits drones, jusqu'à détection, d'au moins un des évènements suivants:
   - selon un critère prédéterminé, d'une suffisance d'exploration d'au moins un groupe d'exploration attribué courant ;
   - changement d'une priorité d'exploration d'au moins un desdits points d'intérêt ;
   - ajout ou suppression d'un drone à ladite pluralité ;
- un module de mise à jour configuré pour mettre à jour, au moins après chaque détection, la liste de groupe(s) d'exploration restant à parcourir attribuée à chaque drone en supprimant de ladite liste tout groupe d'exploration suffisamment exploré.

Par la suite, un tel dispositif est également appelé « contrôleur haut-niveau » par la suite.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un dispositif électronique d'attribution de mission à chaque drone d'une pluralité de drones contrôlés individuellement au moyen d'un réseau de neurones ;
[Fig. 2] la figure 2 illustre un exemple des différentes entrée(s) et sortie(s) associées audit dispositif électronique d'attribution de mission de la figure 1 ;
[Fig. 3] la figure 3 est un organigramme d'un procédé d'attribution de mission à chaque drone d'une pluralité de drones contrôlés individuellement au moyen d'un réseau de neurones, le procédé étant mis en œuvre par le dispositif de la figure 1 ;
[Fig. 4] la figure 4 illustre un exemple d'heuristique de tuilage mis en œuvre pour le partitionnement dudit sous-ensemble de points d'intérêt de ladite zone géographique ;
[Fig. 5] la figure 5 illustre une première variante de mise en œuvre de ladite étape d'attribution ;
[Fig. 6] la figure 6 illustre une première variante de mise en œuvre de ladite étape d'attribution ;
[Fig. 7] la figure 7 illustre le couple de seuils utilisé pour détecter la suffisance d'exploration d'un groupe d'exploration courant.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

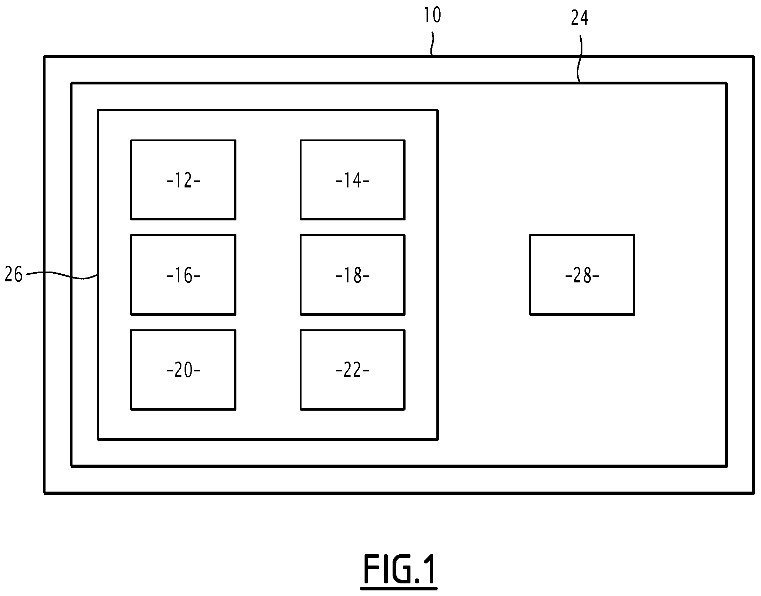

Le dispositif 10 électronique d'attribution de mission à chaque drone d'une pluralité de drones contrôlés individuellement au moyen d'un réseau de neurones selon l'invention, également appelé contrôleur haut-niveau, est illustré sur la figure 1. Comme cela est visible sur cette figure 1, le dispositif électronique d'attribution de mission à chaque drone d'une pluralité de drones comprend un module 12 d'obtention configuré pour obtenir un modèle numérique du terrain associé à ladite zone géographique prédéterminée et la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée.

Comme représenté sur la figure 1, le dispositif 10 électronique d'attribution de mission à chaque drone d'une pluralité de drones comprend en outre un module de partitionnement 14 configuré pour partitionner ledit sous-ensemble en groupes d'exploration regroupant des points d'intérêt voisins en étant espacés les uns des autres d'une distance inférieure à un seuil de distance prédéterminé, chaque groupe étant de taille sensiblement égale.

De plus, le dispositif 10 électronique d'attribution de mission à chaque drone d'une pluralité de drones comprend un module d'attribution 16 configuré pour allouer à chacun desdits drones une liste de groupe(s) d'exploration à parcourir en fonction de la position courante de chacun desdits drones, ladite liste comprenant au moins un desdits groupes d'exploration dudit sous-ensemble partitionné.

En outre, le dispositif 10 électronique d'attribution de mission à chaque drone d'une pluralité de drones comprend un module de détermination 18 configuré, pour chacun desdits drones, pour déterminer un ordre de parcours desdits groupes d'exploration attribués lorsque ladite liste comprend au moins deux desdits groupes d'exploration dudit sous-ensemble.

Le dispositif 10 électronique d'attribution de mission à chaque drone d'une pluralité de drones comprend également les modules 20 et 22, mis en œuvre itérativement au cours de ladite mission jusqu'à ce que ledit sous-ensemble soit complètement exploré, le module 20 correspondant à un module de suivi configuré pour suivre en parallèle la position et le parcours de chacun desdits drones, jusqu'à détection, d'au moins un des évènements suivants: selon un critère prédéterminé, d'une suffisance d'exploration d'au moins un groupe d'exploration attribué courant ; changement d'une priorité d'exploration d'au moins un desdits points d'intérêt ; ajout ou suppression d'un drone à ladite pluralité ; le module 22 correspondant à un module de mise à jour configuré pour mettre à jour, au moins après chaque détection, la liste de groupe(s) d'exploration restant à parcourir attribuée à chaque drone en supprimant de ladite liste tout groupe d'exploration suffisamment exploré

Dans l'exemple de la figure 1, le dispositif électronique d'attribution de mission à chaque drone d'une pluralité de drones comprend une unité de traitement d'informations 24 formée par exemple d'une mémoire 26 et d'un processeur 28 associé à la mémoire 26.

Dans l'exemple de la figure 1, le module d'obtention 12, le module de partitionnement 14, le module d'attribution 16, le module de détermination 18, le module de suivi 20 et le module de mise à jour 22 sont réalisés chacun sous forme d'un logiciel, ou d'une brique logicielle, exécutable par le processeur. La mémoire du dispositif électronique d'attribution de mission à chaque drone d'une pluralité de drones est alors apte à stocker un logiciel d'obtention, un logiciel de partitionnement, un logiciel d'attribution, un logiciel de détermination, un logiciel de suivi et un logiciel de mise à jour. Le processeur est alors apte à exécuter chacun des logiciels parmi le logiciel d'obtention, le logiciel de partitionnement, le logiciel d'attribution, le logiciel de détermination, le logiciel de suivi et le logiciel de mise à jour.

En variante non représentée, le module d'obtention 12, le module de partitionnement 14, le module d'attribution 16, le module de détermination 18, le module de suivi 20 et le module de mise à jour 22 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*)*.*

Lorsque le dispositif 10 électronique d'attribution de mission à chaque drone d'une pluralité de drones est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

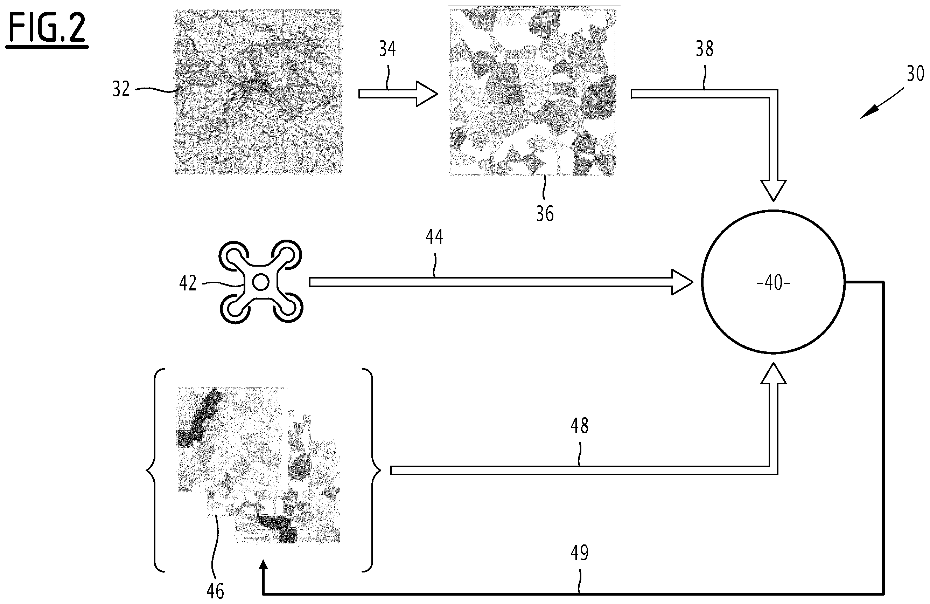

La figure 2 illustre un exemple 30 des différentes entrée(s) et sortie(s) associées audit dispositif électronique d'attribution de mission de la figure 1.

Plus précisément, selon cet exemple 30, le dispositif 10 électronique d'attribution de mission à chaque drone d'une pluralité de drones selon la présente invention est tout d'abord configuré pour obtenir, via le module d'obtention 12 de la figure 1, le modèle numérique 32 du terrain associé à ladite zone géographique prédéterminée de mission.

Puis, via son module de partitionnement 14, le dispositif 10 électronique d'attribution de mission à chaque drone d'une pluralité de drones selon la présente invention est configuré pour partitionner, selon la flèche 34, uniquement ledit sous-ensemble en groupes d'exploration illustrés par différentes nuances de gris sur la vue 36. Ces groupes d'exploration, également appelés clusters, regroupent des points d'intérêt voisins en étant espacés les uns des autres d'une distance inférieure à un seuil de distance prédéterminé, chaque groupe étant de taille sensiblement égale, notamment en termes de durée d'exploration, dont la surface de l'enveloppe convexe est par exemple représentative.

Ces clusters sont transmis selon la flèche 38 en entrée du reste 40 des modules dudit dispositif 10, à savoir le module d'attribution 16, le module de détermination 18, le module de suivi 20 et le module de mise à jour 22.

En parallèle, la position courante de chacun desdits drones 42 est transmise selon la flèche 44 également en entrée du reste 40 des modules dudit dispositif 10, à savoir le module d'attribution 16, le module de détermination 18, le module de suivi 20 et le module de mise à jour 22.

Comme indiqué précédemment, à partir des clusters de la vue 36, et de la position courante de chacun desdits drones 42 transmise selon la flèche 44, le module d'attribution 16 de ce reste 40 des modules est configuré pour attribuer à chacun desdits drones 42 une liste 46 de groupe(s) d'exploration à parcourir, ladite liste 46 comprenant au moins un desdits groupes d'exploration (i.e. cluster).

Et selon les flèches 48 et 49, le dispositif 10 électronique d'attribution de mission est configuré pour mettre à jour en permanence, au moyen de son module de suivi 20 configuré pour suivre en parallèle la position courante et le parcours de chacun desdits drones 44 transmis via ladite flèche 44 audit reste de module 40, et au moyen de son module de mise à jour 22 la liste de groupe(s) d'exploration restant à parcourir attribuée à chaque drone en supprimant de ladite liste tout groupe d'exploration suffisamment exploré.

Selon un mode de réalisation, chaque drone est propre à embarquer son propre dispositif 10 électronique d'attribution de mission (i.e. contrôleur haut-niveau). Dans ce cas, un mécanisme de synchronisation supplémentaire est nécessaire. Tous les drones doivent alors échanger, typiquement toutes les trente secondes, leurs positions et quels groupes d'exploration (i.e. clusters) ils se sont affectés. Dans le cas où deux drones distincts s'allouent des clusters en commun, celui qui a choisi en premier, ce qui est vérifiable via un horodatage, (de l'anglais *timestamp*) garde les groupes d'exploration (i.e. clusters) alors que l'autre relance le procédé d'attribution (i.e. d'allocation) avec cette fois l'information que les groupes d'exploration évoqués sont déjà alloués à un autre drone.

Selon un autre mode de réalisation, au moins un dispositif 10 électronique d'attribution de mission (i.e. contrôleur haut-niveau) est embarqué dans une station de contrôle au sol, qui peut elle-même être embarquée dans un véhicule).

Un moyen de localisation du type positionnement par satellite GNSS (de l'anglais *global navigation satellite systems*) est également propre à être embarqué dans chaque drone 42 pour permettre leur localisation. Alternativement, le moyen de localisation du drone est propre à correspondre à un couplage de type « centrale inertiel et analyse vidéo » d'amers (de l'anglais *Vision Based Navigation*)*.* Selon une autre alternative, chaque drone est propre à être localisé au moyen d'un radar associé à la station de contrôle au sol.

Un moyen d'analyse automatique des données capteurs, par exemple par apprentissage automatique (de l'anglais *machine learning*) pour analyse d'image, permettant de classer des objets par nature est embarqué dans les drones. Typiquement, une caméra optique (ou infrarouge) est embarquée et munie d'un traitement permettant la détection automatique de véhicule, ou la présence d'humain.

Alternativement, le traitement d'images est déporté dans la station de contrôle sol et le flux d'image est envoyé via un moyen de communication, du type µTMA, 5G, Wifi, Satcom, etc.... permettant la remontée d'information à la station de contrôle lorsqu'une détection d'un objet d'intérêt a lieu. Typiquement, ajout d'une icône prédéterminée et de son type dans une interface graphique GUI (de l'anglais *graphical user interface)* de situation tactique, à la bonne position, lorsqu'un drone détecte un véhicule d'un type prédéterminé.

Par ailleurs, la liste des pixels/cellules observés jusqu'à présent est remontée à la station de contrôle à intervalle régulier, typiquement, toutes les secondes, ou toutes les dix secondes, voire toute les minutes. Cette remontée d'information est partagée au sein de l'essaim de drones si on utilise plusieurs drones. Avec la liste des positions courantes des drones, cette vue de ce qui a été observé est un moyen de synchronisation suffisant pour permettre au partitionnement haut niveau mis en œuvre par le dispositif selon la présente invention de répartir les drones convenablement sur la surface à inspecter correspondant à la mission. Autrement dit, la synchronisation d'information peut être imparfaite (mise à jour toutes les trente secondes par exemple, sans pour autant compromettre le fonctionnement de la solution.

Si un des drones est supprimé ou ajouté à l'essaim, il suffit que le module de partitionnement 14 haut-niveau soit exécuté à nouveau sur le sous-ensemble de point d'intérêts non encore explorés pour que l'essaim s'adapte à cette nouvelle configuration.

Un système minimal et classique de détection d'obstacle et d'anticollision non représenté peut être embarqué au sein de chaque drone. A noter que l'évitement d'arbre ou de bâtiment se fait assez spontanément de par l'altitude de vol des drones imposée par le cas d'usage associé à sa mission 30m ou 50m, 100m 200m voire 500m etc.

En outre, de manière non représentée, un système classique d'asservissement à l'altitude du sol (notamment de sorte à rester au-dessus du niveau du sol AGL de l'anglais *above ground level*) est propre à être embarqué au sein de chaque drone, permettant un vol du type « suivi de terrain ».

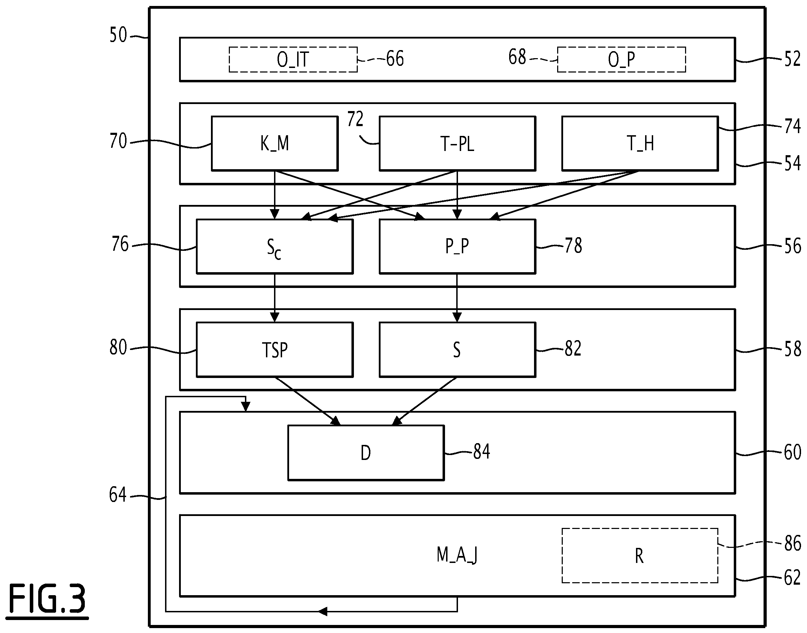

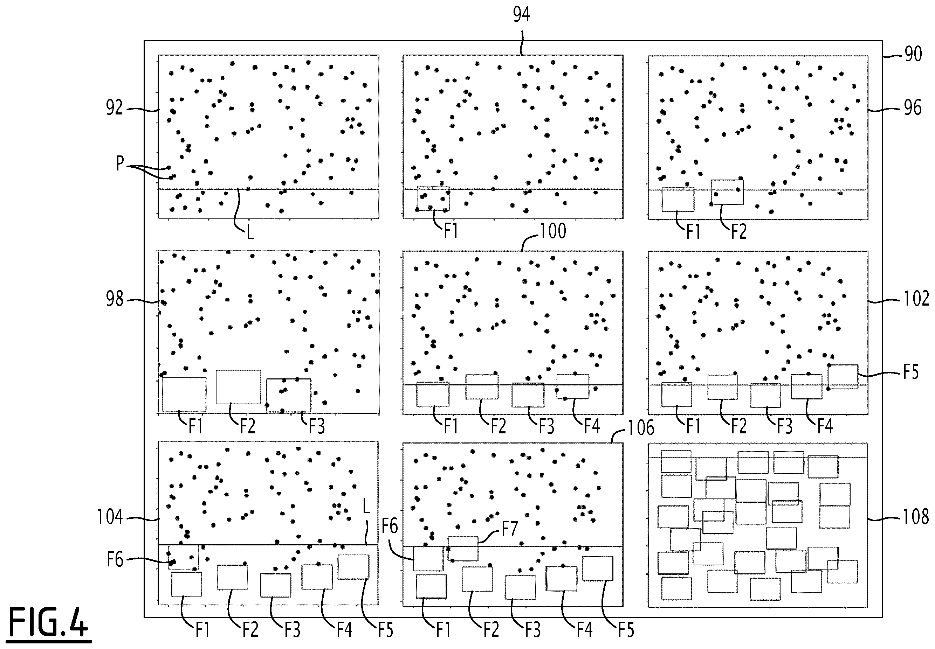

Un procédé 50 d'attribution de mission à chaque drone d'une pluralité de drones contrôlés individuellement au moyen d'un réseau de neurones, mis en œuvre par le dispositif électronique 10, sera désormais expliqué en référence à la figure 3 présentant un organigramme des étapes de ce procédé 50 et aux figures 4 à 7 illustrant différentes variantes de mise en œuvre de celui-ci.

Plus précisément, comme indiqué précédemment, chaque drone est muni d'au moins un capteur d'image dont l'orientation et/ou le zoom est pilotable, la mission de la pluralité de drones étant d'explorer (i.e. fouiller, observer, rechercher) à distance une pluralité de points d'intérêt prédéterminés au sein d'une zone géographique prédéterminée.

Le procédé 50 est mis en œuvre par le dispositif électronique d'attribution décrit précédemment en relation avec les figures 1 et 2 et comprend une première étape 52 d'obtention d'un modèle numérique du terrain associé à ladite zone géographique prédéterminée et de la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée.

Autrement dit, selon cette étape d'obtention 52, la connaissance préexistante du modèle numérique du terrain et de la position des points d'intérêts de la mission au sein du modèle acquis est acquise par le dispositif électronique d'attribution de mission selon la présente invention.

Le procédé 50 selon la présente invention comprend ensuite une étape 54 de partitionnement dudit sous-ensemble en groupes d'exploration regroupant des points d'intérêt voisins en étant espacés les uns des autres d'une distance inférieure à un seuil de distance prédéterminé, chaque groupe étant de taille sensiblement égale, notamment en termes de durée d'exploration, dont la surface de l'enveloppe convexe est par exemple représentative.

Puis, en fonction de la position courante de chacun desdits drones, de manière générale, le procédé 50 selon la présente invention comprend une étape 56 d'attribution à chacun desdits drones d'une liste de groupe(s) d'exploration à parcourir, ladite liste comprenant au moins un desdits groupes d'exploration.

Ensuite, le procédé 50 comprend, pour chacun desdits drones, une étape 58 de détermination d'un ordre de parcours desdits groupes d'exploration attribués lorsque ladite liste comprend au moins deux desdits groupes d'exploration dudit sous-ensemble partitionné.

Puis, le procédé 50 selon la présente invention, comprend une étape 60 de suivi, en parallèle, de la position et du parcours de chacun desdits drones, jusqu'à détection, d'au moins un des évènements suivants:
- selon un critère prédéterminé, d'une suffisance d'exploration d'au moins un groupe d'exploration attribué courant ;
- changement d'une priorité d'exploration d'au moins un desdits points d'intérêt ;
- ajout ou suppression d'un drone à ladite pluralité.

Enfin le procédé 50 selon la présente invention, comprend une étape 62, mise en œuvre au moins après chaque détection, de mise à jour M_A_J de la liste de groupe(s) d'exploration restant à parcourir attribuée à chaque drone en supprimant de ladite liste tout groupe d'exploration suffisamment exploré, ou lors d'un ajout ou d'une suppression de drone ou d'un changement de priorité d'exploration en réitérant (de manière non représentée) l'ensemble des étapes à partir de l'étape de partitionnement 54 appliquée à la partie non explorée dudit sous-ensemble.

Selon la flèche 64, les étapes de suivi 60 et de mise à jour 62 sont mises en œuvre itérativement au cours de ladite mission jusqu'à ce que ledit sous-ensemble soit complètement exploré.

Chacune de ces étapes 52, 54, 56, 58, 60, 62 est ci-après décrite plus en détails.

Notamment, au cours de l'étape 52 d'obtention du modèle numérique du terrain, l'ensemble des points d'intérêt à visiter est fourni sous forme d'une grille bidimensionnelle 2D. Cette grille contient des pixels pleins (ou encore d'une couleur prédéterminée telle que le noir) lorsque qu'ils correspondent à des éléments de terrain devant être observés (i.e. les points d'intérêts de la mission courante), ou des pixels vides dans le cas contraire (ou encore d'une couleur prédéterminée distincte de celle associée au pixel correspondant à des éléments de terrain devant être observés). Autrement dit, le modèle numérique est binaire, la binarité résultat du fait qu'un point de la zone géographique du terrain de la mission est à observer ou non. En complément optionnel, des informations portant sur l'obsolescence et/ou la redondance de l'observation du point d'intérêt sont associés à chaque pixels correspondant. Autrement dit, par obsolescence on entend que l'observation du point d'intérêt est trop ancienne par rapport à une durée prédéterminée, et par redondance on entend la nécessité de répéter l'observation par exemple sous des angles d'observation différents selon une différence d'angle prédéterminée entre chaque angle d'observation.

Tel que représenté en pointillés selon la figure 3, ladite étape d'obtention 52 comprend en outre, à titre optionnel, la mise en œuvre d'une sous-étape 66 d'obtention d'informations de relief du terrain O_IT propres à être prises en compte lors de la mise en œuvre dudit partitionnement pour délimiter lesdits groupes d'exploration formés ultérieurement pendant l'étape 54 de partitionnement.

En effet, en l'état, les groupes d'exploration (i.e. les clusters) résultant de la mise en œuvre de l'étape 54 de partitionnement, ne sont qu'un moyen technique et ne correspondent à aucune notion opérationnelle de la mission. Cela dit selon l'option 66 ces clusters pourraient être calculés pour être bornés par exemple par des informations de topologie et/ou portant sur le relief du terrain, les lignes de crêtes entre autres, de sorte à alors obtenir du fait de leur prise en compte durant l'étape 54 de partitionnement, des clusters qui correspondent à la notion géotactique de « compartiment de terrain ».

Tel que représenté en pointillés selon la figure 3, ladite étape d'obtention 52 comprend en outre, à titre optionnel, la mise en œuvre d'une sous-étape 68 d'obtention d'une priorité d'exploration d'au moins un desdits points d'intérêt, et sa prise en compte lors de ladite attribution 56.

Ainsi, lorsqu'un utilisateur du dispositif 10 selon la présente invention saisit des zones à être prioritairement explorée durant la mission, il est aisé d'affecter ces priorités aux groupes d'exploration (i.e. clusters) qui correspondent à ces zones prioritaires. En effet, comme indiqué par la suite, la solution pour l'attribution des clusters et celle de parcours des clusters sont facilement modifiées pour traiter en premier les groupes d'exploration (i.e. clusters) à forte priorité.

En ce qui concerne l'étape suivante 54 de partitionnement, la solution retenue s'appuie globalement sur un partitionnement spatial.

Pour faire simple, une implémentation « naïve » diviserait la surface de la mission en autant de secteurs qu'il y a de drones. Un algorithme de parcours/balayage systématique par exemple de type tondeuse à gazon, pourrait alors produire la succession de fenêtres qui permettra de tout couvrir successivement.

Si l'espace d'état du réseau de neurones est un carré de n pixels de côté, typiquement avec n de l'ordre de cent, et que le terrain associé à la mission correspond à une zone d'image de l'ordre de mille pixels ou cellules de côté, avec typiquement un pixel (ou cellule) faisant 10m, soit un terrain de 10km de côté, il est classique de décomposer ce terrain en une grille 2D régulière de n pixels par fenêtre/cellule (la dernière ligne de cellule et/ou la dernière colonne pouvant être seulement partiellement remplie de pixels).

Classiquement, si on a m drones, il est connu de diviser la grille en m ensembles contenant à peu près le même nombre de cellules (à l'arrondi entier près). Une stratégie de balayage systématique peut alors être employée : lorsque tous les pixels (ou un seuil du type 90%) d'une cellule ont étés observés, par un drone, on le fait passer à la cellule (i.e. fenêtre) connexe voisine, d'où le nom de fenêtre glissante, la taille de chaque fenêtre étant compatible avec l'espace d'état du réseau de neurones utilisé. A noter que classiquement il également connu d'utiliser de telles fenêtre glissantes mais qui se chevauchent du moment que la succession des fenêtres se chevauchant ou non couvre l'ensemble de la surface de la mission.

Toutefois cette approche classique du partitionnement n'est pas optimale car impropre à gérer facilement une notion de priorité de zones et/ou du fait que les fenêtres/cellules ne contiennent pas nécessairement le même nombre de pixels correspondant aux point d'intérêt à observer spécifiquement selon la mission. Autrement dit, les durées nécessaires à l'observation des fenêtres peut être très variables, ce qui conduit potentiellement à une solution sous-optimale où des drones finissent leur mission (plus de fenêtre à observer) alors que d'autres sont loin de la fin, non efficience(s) que la présente invention propose d'éviter au moyen de trois options distinctes 70, 72 et 74 de partitionnements, plus élaborés que le partitionnement spatial classique précité.

Selon une première option 70, ledit partitionnement dudit sous-ensemble en groupes d'exploration est un partitionnement K_M en k-moyennes (i.e. K plus proches voisins) (de l'anglais *K-Means*)*,* le nombre optimal de groupes d'exploration étant déterminé en :
- testant en parallèle plusieurs valeurs du nombre de groupes d'exploration,
- en sommant, pour chaque valeur du nombre de groupes d'exploration, la surface de l'enveloppe convexe associée à chaque groupe d'exploration, le nombre optimal correspondant à la valeur fournissant la surface totale minimale.

Plus précisément, ce type de partitionnement (i.e. *clustering*) en k-moyennes (i.e. K plus proches voisins) (K-means), est appliqué aux points d'intérêts, obtenus lors de l'étape d'obtention 52, afin d'en extraire des groupes d'exploration (i.e. clusters de points d'intérêts). Ces clusters ont la propriété de ne regrouper entre eux que des points d'intérêts relativement proches les uns des autres lorsqu'ils sont issus d'un même cluster.

Classiquement, l'algorithme associé au partitionnement (i.e. clustering) en k-moyennes (i.e. K plus proches voisins) ne permet pas de déterminer automatiquement le nombre optimal de clusters (i.e. groupes d'exploration) à extraire.

Le caractère préférable d'une valeur du nombre de clusters utilisés est déterminé selon la présente option de la présente invention par la surface totale recouverte par les enveloppes convexes des clusters et/ou la forme de ces enveloppes convexes. Cette surface totale des enveloppes convexes et/ou leur forme est/sont en effet un bon indicateur de la durée d'exploration du ou des cluster(s). La somme des surfaces des enveloppes de tous les clusters diminue à mesure que le nombre de clusters augmente. Aussi, plusieurs valeurs de ce nombre k total de clusters sont testées en parallèle, et lorsque la diminution de la surface totale des enveloppes convexes des clusters commence à ralentir, la valeur du nombre k de clusters retenue est celle qui a fourni l'aire totale minimale.

A noter que dans cette approche selon l'option 70, certains clusters du partitionnement (i.e. clustering) en k-moyennes (i.e. K plus proches voisins) (K-Means) peuvent être plus grands en surface que la « cellule » carrée qui est classiquement utilisée en entrée du réseau de neurones qui fait office de contrôleur bas-niveau tel que notamment mis en œuvre selon la demande de brevet FR 2213738 au nom de la Demanderesse. Un parcours naïf intra-cluster est alors classiquement mis en œuvre, de type tondeuse à gazon par exemple.

Selon une autre option 72 du partitionnement 54, ledit partitionnement 54 dudit sous-ensemble en groupes d'exploration est obtenu par tuilage par programmation linéaire T-PL.

De manière alternative au partitionnement (i.e. clustering) en k-moyennes (i.e. K plus proches voisins) (K-Means), on peut remarquer que le problème de partitionnement que l'on cherche à résoudre est finalement un problème de couverture minimale, à savoir trouver un ensemble de cardinalité minimal de fenêtres (par exemple de forme rectangles ou carrés pour former les « cellules » données en entrée au réseau de neurones qui fait office de contrôleur bas-niveau tel que notamment mis en œuvre selon la demande de brevet FR 2213738 au nom de la Demanderesse) tel que tous les points à observer (i.e. les points d'intérêt) sont au moins dans une fenêtre.

Le tuilage par programmation linéaire T-PL permet de répondre à un tel problème de couverture minimale. Toutefois, pour certains scénarios, cette approche de tuilage par programmation linéaire T-PL n'est pas en mesure de passer à l'échelle sur le nombre de points d'intérêts à observer (i.e. n'a pas la capacité de calculs quasi-instantanés pour un grand nombre de point d'intérêts à observer) les temps de calculs du tuilage par programmation linéaire pouvant être de plusieurs minutes, ce qui est incompatible avec le besoin de pouvoir relancer les calculs en cours de mission, suite à changement, par exemple, sur les hypothèses d'entrées.

Aussi, selon une autre option 74 du partitionnement 54, ledit partitionnement 54 dudit sous-ensemble en groupes d'exploration est obtenu en appliquant, selon une sous-étape 74, une heuristique de tuilage T_H prédéterminée, chaque groupe d'exploration correspondant à une tuile dudit tuilage.

Plus précisément, tel que décrit par la suite en relation avec la figure 4, l'application 74 de ladite heuristique de tuilage comprend les premières étapes suivantes :
- placement d'une première tuile de forme prédéterminée dans un coin arbitraire de ladite image, et
- obtention de la position définitive de ladite première tuile au sein de l'image par :
   - décalage selon une première des directions de la grille bidimensionnelle tant qu'aucun pixel correspondant à un desdits points d'intérêt n'est en dehors de ladite première tuile, puis par
   - décalage selon l'autre des directions de la grille bidimensionnelle tant qu'aucun pixel correspondant à un desdits points d'intérêt n'est en dehors de ladite première tuile ;
   les points d'intérêt couverts par la première tuile n'étant plus à prendre en compte pour la détermination de la position des tuiles suivantes
et, jusqu'à couverture de chacun des desdits points d'intérêt de ladite pluralité, la réitération des étapes suivantes :
- placement d'une autre tuile de ladite forme prédéterminée :
   - directement à la suite de la tuile dont la position définitive a été précédemment obtenue selon ladite première direction, ou,
   - selon ladite autre direction :
      - au début de la ligne suivante celle de la tuile dont la position définitive a été précédemment obtenue, si ladite autre direction est horizontale, ou
      - de la colonne suivante celle de la tuile dont la position définitive a été précédemment obtenue, si ladite autre direction est horizontale, et
- obtention de la position définitive de ladite autre tuile au sein de l'image par :
   - décalage selon ladite première direction tant qu'aucun pixel correspondant à un desdits points d'intérêt n'est en dehors de ladite autre tuile, puis par
   - décalage selon ladite autre direction tant qu'aucun pixel correspondant à un desdits points d'intérêt n'est en dehors de ladite autre tuile ;
   les points d'intérêt couverts par ladite autre tuile n'étant plus à prendre en compte pour la détermination de la position des tuiles suivantes.

En ce qui concerne l'étape suivante 56 d'attribution, de même que pour l'étape précédente de partitionnement 54, plusieurs options sont possibles.

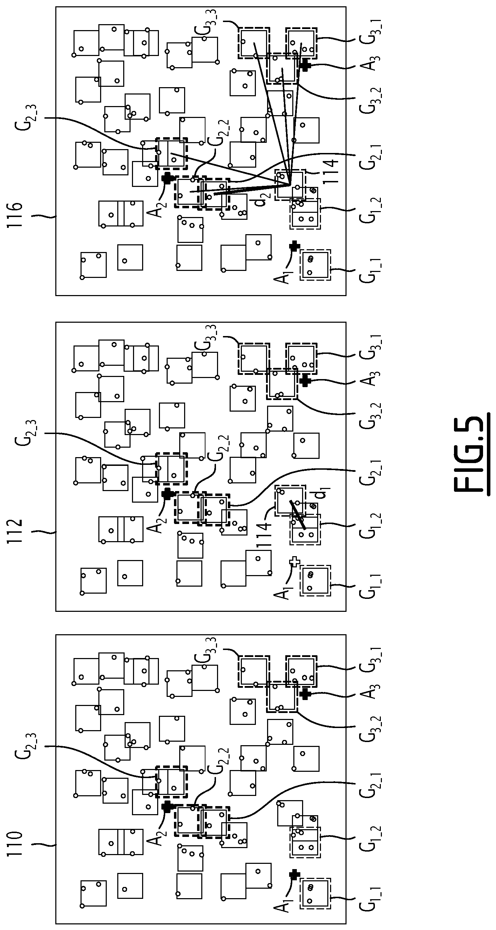

Selon une première option, tel que décrit par la suite en relation avec la figure 5, comme indiqué précédemment lorsqu'à titre optionnel l'étape 52 d'obtention comprend également l'obtention optionnelle 68 d'une priorité d'exploration d'au moins un desdits points d'intérêt, et sa prise en compte lors de ladite attribution,
ladite attribution 56 comprend alors l'ensemble 76 des sous-étapes suivantes :
- calcul de la surface de l'enveloppe convexe associée à chaque groupe d'exploration ;
- première attribution, à ladite pluralité de drones, de tous les groupes d'exploration comprenant au moins un point d'intérêt à explorer prioritairement et/ou du groupe d'exploration le plus proche ;
- détermination du drone ayant la plus petite durée d'exploration cumulée correspondant au drone dont la liste de groupe(s) d'exploration à parcourir présente la somme minimale des surfaces des enveloppes convexes desdits groupes d'exploration qui lui ont été attribués lors de ladite première attribution
- pour chaque groupe d'exploration non attribué dudit sous-ensemble partitionné, détermination d'un score comprenant :
   - la détermination d'une première distance correspondant à la distance minimale dudit groupe d'exploration non attribué auxdits groupes d'exploration attribués audit drone ayant le moins de surface à explorer ;
   - la détermination d'une deuxième distance correspondant à la distance minimale dudit groupe d'exploration non attribué auxdits groupes d'exploration attribués aux autres drones de ladite pluralité distincts dudit drone ayant le moins de surface à explorer ;
   - la détermination du score Sc correspondant à la différence entre lesdites première et deuxième distances ;
   - jusqu'à ce que la somme des surfaces des enveloppes convexes desdits groupes d'exploration attribués à chaque drone soit sensiblement égale ou jusqu'à ce que tous lesdits groupes d'exploration issus du partitionnement soient attribués, deuxième attribution de groupes d'exploration non attribués lors de ladite première attribution, le drone ayant le moins de surface à explorer se voyant attribué le groupe d'exploration non attribués présentant le score le plus faible.

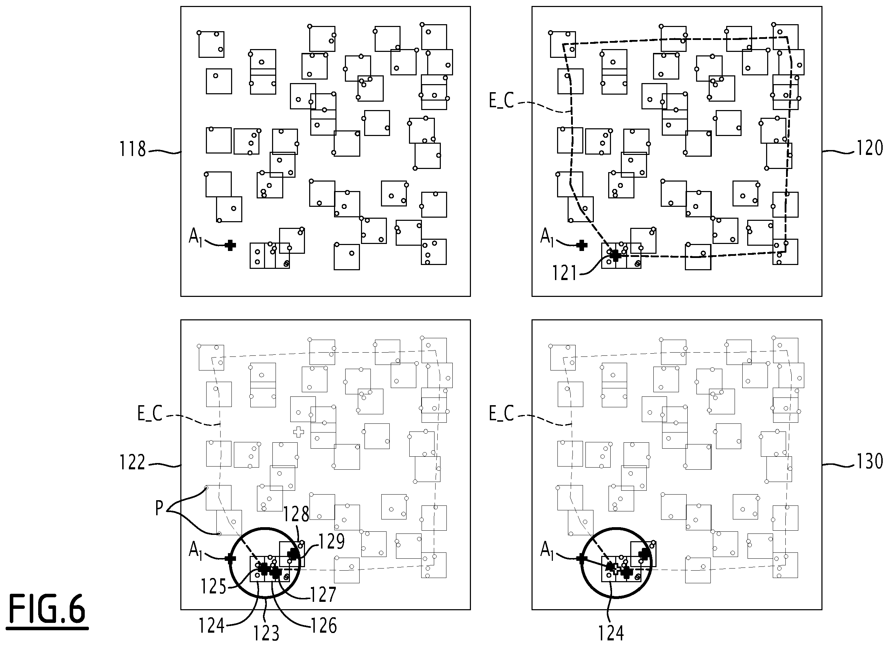

Selon une deuxième option, tel que décrit par la suite en relation avec la figure 6, ladite attribution comprend l'ensemble 78 des sous-étapes suivantes :
- calcul de l'enveloppe convexe de tous les groupes d'exploration dudit sous-ensemble partitionné ;
- pour chacun desdits drones :
   - détermination du sommet de l'enveloppe convexe le plus proche dudit drone considéré ;
   - détermination des groupes d'exploration dudit sous-ensemble partitionné les plus proches dudit sommet,
   - parmi lesdits groupes d'exploration dudit sous-ensemble partitionné les plus proches dudit sommet, détermination dudit groupe d'exploration le plus proche dudit drone considéré ;

   - attribution dudit groupe d'exploration le plus proche P_P audit drone considéré.

Le choix d'une des options d'attribution 56 correspondant à l'ensemble 76 de sous-étapes ou à l'ensemble 78 de sous-étapes conditionne ensuite la mise en œuvre de l'étape 58 de l'ordre de parcours inter groupes d'exploration (i.e. inter-clusters) d'une même liste.

En effet, selon la première option, correspondant à l'ensemble 76 de sous-étapes, au moins une liste attribuée à un drone de ladite pluralité de drone est propre à contenir plusieurs groupes d'exploration si bien qu'il est nécessaire de déterminer l'ordre de parcours intergroupes d'exploration de cette liste.

L'itinéraire à déterminer pour le drone considéré doit être le plus court chemin partant de sa position et rejoignant tous les clusters qu'il doit visiter. Ce problème est une variante 80 du très connu problème du voyageur de commerce TSP (de l'anglais *Travelling salesman problem*) à laquelle la présente invention propose une solution heuristique décrite ci-après.

Selon cette variante 80 mise en œuvre dans le cas de l'application de la première option d'attribution 56, la détermination 58 d'ordre de parcours desdits groupes d'exploration (et non des points) comprend donc l'optimisation de la distance de parcours débutant à la position courante dudit drone considéré et passant par l'intégralité desdits groupes d'exploration qui lui sont attribués en résolvant, au moyen d'un algorithme 3-opt, un problème correspondant sensiblement au problème du voyageur de commerce, et en considérant un nombre limite prédéterminé de groupes d'exploration attribués, ledit ordre de parcours étant ré-optimisé via ledit algorithme 3-opt dès qu'un de ses groupes d'exploration attribué est suffisamment exploré, en ajoutant le groupe d'exploration attribué le plus proche du dernier des groupes d'exploration attribué appartenant au nombre limite prédéterminé de groupes d'exploration attribués lors de l'itération précédente de l'algorithme 3-opt.

En effet, afin de garantir un parcours efficace pour chaque drone, le dispositif 10 selon la présente invention (également appelé contrôleur haut-niveau) doit trouver le plus court chemin commençant à la position actuelle de chaque drone et passant par l'intégralité des groupes d'exploration (clusters) qui leur sont respectivement attribués (jusqu'à ce que tous les clusters soient attribués à un drone), et ce dès la première itération des étapes suivantes 60 et 62.

Ce problème étant NP-complexe (NP signifiant « non déterministe polynomial » (de l'anglais *nondeterministic polynomial time*)*,* il n'est pas envisageable de le résoudre exactement sur un nombre de clusters important. Aussi, l'approche utilisée selon la présente invention est double : résoudre une version partielle du problème du voyageur de commerce. TSP et ce de manière approximative. En d'autres termes, au lieu de considérer tous les groupes d'exploration (i.e. clusters) qui seront attribués aux drones dès la première itération des étapes suivantes 60 et 62, on n'en considère qu'un nombre fini, par exemple dix au maximum, et on trouve une solution acceptable au problème du voyageur de commerce, mais qui n'a aucune garantie d'être la meilleure. Cette solution est déterminée grâce à l'heuristique appelée « 3-opt ». C'est donc ainsi que l'ordre de parcours des clusters est déterminé pour chaque drone à chaque nouveau calcul des attributions. Dès qu'un cluster est marqué comme observé selon l'étape 60, on relance l'heuristique 3-opt après avoir ajouté le cluster le plus proche déjà affecté au drone, mais qui n'était pas encore dans la liste des dix.

La deuxième option d'attribution 56 correspondant à l'ensemble 78 de sous-étapes affecte systématiquement et uniquement le groupe d'exploration libre le plus proche, si bien que selon cette deuxième option, la détermination 58 d'un ordre de parcours intergroupes d'exploration au sein d'une même liste est S : sans objet, selon la sous-étape 82, puisque chaque liste ne comprend qu'un seul groupe d'exploration.

L'étape suivante de suivi 60 comprend notamment la sous-étape 84 de détection D selon un critère prédéterminé, d'une suffisance d'exploration d'au moins un groupe d'exploration attribué courant.

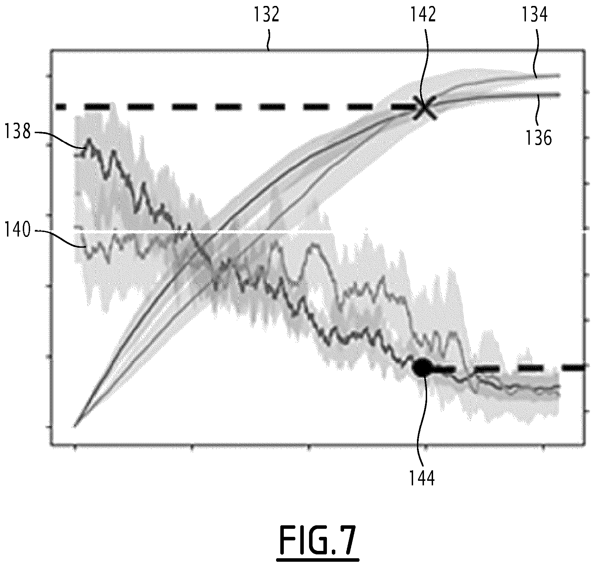

En complément facultatif, tel qu'illustré par la suite par la figure 7, ledit critère prédéterminé dépend, pour chaque groupe d'exploration, au moins des éléments suivants :
- la densité de pixels à explorer correspondant à la proportion de pixels à explorer, chaque pixel à explorer correspondant à un point d'intérêt à explorer, parmi l'ensemble des pixels constituant le groupe d'exploration courant ;
- le taux d'exploration correspondant à la proportion de pixels déjà explorés parmi l'ensemble des pixels à explorer du groupe d'exploration courant ;
- la dérivée du taux d'exploration ;

une pluralité de plages de densité de pixels distinctes étant définie, chaque plage de densité de pixels étant respectivement associée à un couple de seuils comprenant un seuil de taux d'exploration et à un seuil de dérivée dudit taux d'exploration ;
pour la plage de densité du groupe d'exploration courant, la suffisance d'exploration étant obtenue lorsque le taux d'exploration est supérieur audit seuil de taux d'exploration dudit couple associé à ladite plage de densité et lorsque le taux d'exploration est inférieur au seuil de dérivée dudit taux d'exploration.

Selon ce complément facultatif, vis-à-vis des travaux classiques de l'état de l'art, il est à remarquer qu'un tel critère prédéterminé permet de considérer comme un succès une exploration qui n'est pas totale (si le nombre de points non observés reste raisonnable, de l'ordre de 2%, voire 10%, en particulier si ces points non observés ne sont pas connexes), alors que dans le cas du TSP classique, une exploration non totale, voire des revisites de points, est souvent considéré comme une solution non valide.

A titre d'alternative, ledit critère prédéterminé, d'une suffisance d'exploration d'au moins un groupe d'exploration attribué courant, correspond à l'atteinte d'un seuil de redondance prédéterminé, en notant que par redondance, on entend la nécessité de répéter l'observation par exemple sous des angles d'observations différents selon une différence d'angle prédéterminée entre chaque angle d'observation.

Enfin, en complément facultatif, l'étape 62 de mise à jour M_A_J comprend en outre une sous-étape 86 de réattribution R desdits groupes d'exploration restant à parcourir lorsque la liste mise à jour d'au moins un desdits drones est vide, ladite réattribution correspondant au moins à l'attribution, audit drone dont la liste est vide, d'au moins un groupe d'exploration restant à parcourir attribué au drone ayant le plus de surface restante à explorer, ledit au moins un groupe d'exploration restant à parcourir réattribué étant le plus éloigné ou le dernier à visiter selon l'ordre de parcours dudit drone ayant le plus de surface restante à explorer.

Autrement dit, lorsqu'un drone a fini d'explorer tous les groupes d'exploration (i.e. clusters) qui lui ont été attribués, toujours dans une optique de répartition équitable des charges de travail, le dispositif 10 (i.e. contrôleur haut-niveau) va attribuer à ce drone des groupes d'exploration (i.e. clusters) appartenant aux drones les plus en retard sur leur exploration. Ceci permet d'équilibrer plus finement la charge de travail.

Ce processus de mise à jour s'effectue à chaque fois qu'un drone finit d'explorer un cluster et est donc sujet à la contrainte de s'exécuter en temps réel. Le choix du cluster qui doit être réattribué est basé sur la distance au drone, le cluster le plus éloigné étant réattribué ou, dans le cas où le parcours des clusters est calculé via une variante heuristique 80 du TSP, tel que décrit précédemment, le dernier cluster dans la liste de visite prévue est celui qui est réattribué.

La figure 4 illustre via la représentation schématique 90, la mise en œuvre de la troisième option 74 de partitionnement via une heuristique de tuilage T_H prédéterminée.

Cette représentation schématique 90 comprend neuf vues 92, 94, 96, 98, 100, 102, 104, 106 qui illustre le tuilage pas à pas de l'image, par exemple de 500 pixels par 500 pixels, correspondant à la surface totale associée à la mission courante de la pluralité de drones, chaque tuile correspondant à un groupe d'exploration selon la présente invention.

Ladite heuristique permet de trouver un résultat équivalent au tuilage par programmation linéaire, sans garantie d'optimalité sur le nombre de rectangle trouvés mais dans un temps très court, ce qui est compatible avec le besoin de pouvoir relancer les calculs en cours de mission, suite à changement sur les hypothèses d'entrées.

L'approche commence par choisir un coin arbitraire du terrain de la mission illustré par la vue 92 comprenant les points P d'intérêt à observer, typiquement, le coin en bas à gauche et une première ligne horizontale L d'application de ladite heuristique.

Une tuile F1 est placée dans ce coin, et est décalée sur la droite, tant qu'aucun pixel correspondant à un point d'intérêt P à observer à l'intérieur de la tuile se retrouve en dehors. Ensuite, cette même tuile est décalée vers le haut, toujours jusqu'à ce qu'un pixel soit exclu. Cette première tuile a alors sa position définitive tel qu'illustrée par la position de la tuile F1 dans la vue 94.

Le marquage des pixels correspondant aux points d'intérêt P à observer de la tuile F1 est enlevé du terrain tel qu'illustré par la vue suivante 96 pour déterminer la position des tuiles suivantes. La seconde tuile F2 est placée en bas, sur la droite de la première tuile F1. De la même manière que la tuile F1, la tuile F2 est elle aussi déplacée sur la droite puis vers le haut jusqu'à obtenir sa position définitive.

Comme illustré par les vues 98, 100 et 102, la position des autres tuiles F3, F4 et F5 est déterminée de manière similaire jusqu'à atteindre la fin de la première rangée tel qu'illustré par la vue 102 où tous les point d'intérêt qui était sous la ligne L sont désormais couvert par une tuile.

Comme illustré par les vues 104 et 106, on recommence la détermination de manière similaire des tuiles suivantes F6 et F7 sur un terrain où l'on a tronqué la première rangée la ligne L étant déplacée vers le haut comme illustré par la vue 104 et ainsi de suite jusqu'à obtention du tuilage (i.e. partitionnement) complet illustré par la vue 108.

Lorsqu'un tel tuilage est utilisé avec des tuiles (i.e. clusters ou groupe d'exploration selon la présente invention) de forme rectangulaires voire carré, il reste néanmoins optionnellement intéressant par la suite de calculer l'enveloppe convexe des pixels qui sont à l'intérieur et son aire. Cette aire pouvant être utile, comme indiqué précédemment, dans le mécanisme d'attribution des groupes d'exploration (i.e. clusters) au drones.

Il est à noter que selon la figure 4, un traitement horizontal par rangée/ligne horizontale est mis en œuvre, mais qu'un traitement vertical par colonne/ligne verticale est déductible directement et sans ambiguïté par l'homme du métier à partir de cet exemple.

La figure 5 illustre la première option d'attribution 56 correspondant à un système d'enchères basé sur la détermination et l'utilisation d'un score Sc afin de garantir que les drones aient des surfaces à explorer similaires, que l'ordre de visite soit efficace et que les groupes d'exploration (i.e. clusters) attribués à chaque drone ne soient pas disséminés aux quatre coins de la zone de mission, mais plutôt qu'ils soient relativement proches les uns des autres. Afin de gérer cette répartition (i.e. attribution), le dispositif 10 selon la présente invention (également appelé contrôleur haut-niveau) a déterminé/reçu en entrée du module d'attribution 16, les informations concernant le partitionnement 54 (i.e. clustering), les positions de chaque drone.

Plus précisément, la vue 110 de la figure 5 illustre le résultat de la sous-étape de l'ensemble 76 correspondant à la première attribution, à ladite pluralité de drones représentée par les croix A₁, A₂ et A₃, de tous les groupes d'exploration comprenant au moins un point d'intérêt à explorer prioritairement et/ou du groupe d'exploration le plus proche.

Autrement dit, selon cette première vue, le drone A₁ a reçu selon cette première attribution la mission d'explorer les groupes d'exploration G_{1_1} et G_{1_2}, le drone A₂ a reçu selon cette première attribution la mission d'explorer les groupes d'exploration G_{2_1}, G_{2_2} et G_{2_3}, le drone A₃ a reçu selon cette première attribution la mission d'explorer les groupes d'exploration G_{3_1}, G_{3_2} et G_{3_3}.

Comme indiqué précédemment, afin de garantir une équité des charges de travail de chaque drone A₁, A₂ et A₃, c'est toujours le drone qui a le moins de surface à explorer (somme des surfaces des enveloppes convexes des groupes d'exploration (i.e. clusters)) qui se voit attribuer un nouveau groupe d'exploration (i.e. cluster).

Selon la première option d'attribution 56, ce choix est basé sur un score qui est calculé pour chaque groupe d'exploration (i.e. cluster) non attribué. Le score utilisé contient deux composantes. La première composante évalue la distance minimale du groupe d'exploration (i.e. cluster) non attribué considéré aux groupes d'exploration (i.e. clusters) déjà attribués au drone considéré. Cette première composante favorise l'attribution de groupes d'exploration (i.e. clusters) proches de ceux déjà attribués pour minimiser les déplacements effectués par les drones pour rejoindre leurs prochains clusters.

La vue 112 illustre cette première distance minimale d₁ pour le groupe d'exploration non attribué 114 aux groupes d'exploration (i.e. clusters) G_{1_1} et G_{1_2} attribués au drone A₁, la distance au groupe d'exploration G_{1_2} étant retenue comme la distance minimale d₁, la distance (non représentée) au groupe d'exploration G_{1_1} étant supérieure.

La deuxième composante évalue la distance minimale du cluster considéré aux clusters attribués aux autres drones. Cela permet d'éviter que les drones se croisent trop.

La vue 116 illustre cette deuxième distance minimale d₂ pour le groupe d'exploration non attribué 114 aux groupes d'exploration (i.e. clusters) G_{2_1}, G_{2_2} et G_{2_3} attribués au drone A₂ et aux groupes d'exploration (i.e. clusters) G_{3_1}, G_{3_2} et G_{3_3} attribués au drone A₃, la distance au groupe d'exploration G_{2_1} étant retenue comme la distance minimale d₂, les autres distances aux autres G_{2_2}, G_{2_3}, G_{3_1}, G_{3_2} et G_{3_3} étant supérieure.

Ces deux composantes sont ensuite combinées pour donner le score Sc de chaque cluster avec : Sc = d1 - d2.

Le groupe d'exploration (i.e. cluster) ayant le score le plus faible est ensuite attribué au drone dont c'était le tour de se voir attribuer un nouveau groupe d'exploration (i.e. cluster), à savoir celui ayant le moins de surface à explorer. Ce processus favorise des attributions cohérentes et plus efficace pour le trajet des drones.

La figure 6 illustre la deuxième option d'attribution 56 correspondant à la mise en œuvre de l'ensemble 78 de sous-étapes de la figure 3. Cette deuxième option vise à ne pas affecter tous les groupes d'exploration (i.e. clusters) dès le début de la mission, mais à la place d'affecter systématiquement et uniquement le cluster libre le plus proche P_P de chaque drone.

Puis, lorsque cette deuxième option est mise en œuvre au cours de l'étape d'attribution 56, lors de l'étape de mise à jour 62, dès qu'un groupe d'exploration (i.e. cluster) est marqué comme observé au cours de l'étape 60, on affecte à nouveau le groupe d'exploration (i.e. cluster) le plus proche libre au drone qui vient de finir l'observation.

Cette approche implique classiquement de parfois laisser de côté un ou plusieurs clusters, avant que les drones y reviennent en fin de mission.

Pour contourner ce problème, il est proposé selon cette deuxième option de calculer l'enveloppe convexe de tous les groupes d'exploration (i.e. clusters), et d'affecter à chaque drone le sommet de cette enveloppe le plus proche.

La vue 118 de la figure 6 illustre la situation initiale avec la position du drone A₁ et les groupes d'exploration de forme sensiblement rectangulaire ou carré issus de l'étape 54 de partitionnement.

La vue 120 illustre l'enveloppe convexe E_C calculée selon cette deuxième option et le sommet 121 le plus proche affecté au drone A₁.

La vue 122 illustre la zone 123 comprenant les groupes d'exploration (i.e. clusters) comprenant des point d'intérêt P, les plus proches dudit sommet 121 de la vue 120, à savoir le groupe d'exploration (i.e. cluster) 124 centré sur le pixel 125, le groupe d'exploration 126 (i.e. cluster) centré sur le pixel 127, le groupe d'exploration 128 (i.e. cluster) centré sur le pixel 129.

La vue 130 illustre l'attribution du groupe d'exploration (i.e. cluster) 124 qui parmi les groupes d'exploration 124, 126 et 128 est le groupe d'exploration le plus proche du drone A₁.

Lorsque le prochain groupe d'exploration (i.e. cluster) à attribuer à un drone doit être déterminé, le dispositif 10 sélectionne le groupe d'exploration (i.e. cluster) le plus proche uniquement si cela n'éloigne pas ledit drone considéré du sommet qui lui est affecté.

Autrement, selon cette deuxième option d'attribution 56, le dispositif 10 sélectionne alors le groupe d'exploration (i.e. cluster) le plus proche qui n'éloigne pas ledit drone considéré du sommet (ce cluster existe forcément). A chaque fois qu'un cluster est marqué comme observé, l'enveloppe convexe de tous les clusters restant est recalculée, chaque drone se voit affecté, selon cette deuxième option d'attribution 56, à nouveau le sommet le plus proche de cette enveloppe E_C. En pratique, l'ancienne enveloppe et la nouvelle partagent des sommets en commun, et pour la plupart des drones, l'ancien sommet et le nouveau coïncident d'une enveloppe convexe à l'enveloppe convexe suivante calculée dès détection de la suffisance d'exploration courante d'un groupe d'exploration attribué.

La figure 7 illustre le couple de seuils utilisé pour détecter la suffisance d'exploration d'un groupe d'exploration courant.

En effet, comme indiqué précédemment, le dispositif 10 selon la présente invention doit détecter lorsqu'il doit affecter un nouveau groupe d'exploration à un drone, typiquement lors d'au moins un des évènements suivants:
- selon un critère prédéterminé, d'une suffisance d'exploration d'au moins un groupe d'exploration attribué courant ;
- changement d'une priorité d'exploration d'au moins un desdits points d'intérêt ;
- ajout ou suppression d'un drone à ladite pluralité (i.e. essaim de drones).

En ce qui concerne la détection de la suffisance d'exploration d'au moins un groupe d'exploration, il est proposé d'utiliser pour cela un seuil sur la quantité de pixels explorés.

Le contrôle individuel des drones, portant sur leur position géographique et l'orientation du capteur d'image embarqué, est réalisé par un réseau de neurones, dans le cadre d'un apprentissage par renforcement, tel que notamment mis en œuvre selon la demande de brevet FR 2213738 au nom de la Demanderesse, étant efficace surtout en début d'exploration et moins lorsqu'il s'agit de finir complètement l'exploration.

Comme le caractère systématique de l'exploration n'est pas nécessairement recherché pour réussir la mission courante et qu'à la place, il est possible de privilégier une exploration sensiblement plus rapide, quitte à laisser des pixels correspondant à des points d'intérêts non explorés, il est utile de déterminer les seuils à partir desquels le contrôle individuel des drones perd en efficacité.

Expérimentalement, il a été constaté que ces seuils sont dépendants des densités de pixels. Par abus de langage, on appelle « densité », la proportion (i.e. le taux) de pixels à explorer parmi l'ensemble des pixels du groupe d'exploration courant (i.e. cluster courant ou encore fenêtre d'exploration courante), chaque pixel à explorer correspondant à un point d'intérêt à explorer. Il est alors proposé d'utiliser ces seuils variables en fonction de la densité.

Plus précisément, comme indiqué précédemment, il est intéressant de définir deux seuils par plage de densité de pixels :
- le premier seuil consiste à considérer le taux d'exploration correspondant à la proportion de pixels déjà explorés parmi l'ensemble des pixels à explorer du groupe d'exploration courant. Selon la présente invention, on considère en effet qu'avant que ce seuil soit atteint, le drone (i.e. l'agent) explore la fenêtre de manière efficiente, mais qu'une fois ce seuil atteint, un plateau du taux d'exploration risque d'apparaître.
- le deuxième seuil consiste à considérer la dérivée du taux d'exploration, afin de détecter plus finement les plateaux au niveau desquels l'exploration progresse beaucoup plus lentement. En pratique, on estime la dérivée du taux d'exploration sur une succession d'étapes de décision du drone (i.e. de l'agent), par exemple au bout de vingt étapes de décision.

La figure 7 est un exemple qui illustre le principe de détermination de ces seuils. Pour un intervalle de densité donnée, par exemple sur la figure 7 pour une densité de pixels comprise entre 30% et 100% (i.e. entre 0,3 et 1), un drone de la pluralité de drones effectue l'exploration d'un ensemble de zones géographiques dont l'image présente une dimension sensiblement égale à celle d'un groupe d'exploration (i.e. d'une fenêtre d'exploration).

La courbe moyenne de taux d'exploration par épisode est calculée, un « épisode » correspondant à l'exploration d'une zone de l'ensemble de zones géographiques), de même que la courbe moyenne de la dérivée du taux d'exploration.

Dans la figure 7, sur la vue 132, les courbes 134 et 136 croissantes correspondent respectivement à l'évolution du taux d'exploration lorsque l'exploration est mise en œuvre par un drone dont le contrôle individuel, portant sur leur position géographique et l'orientation du capteur d'image embarqué, est réalisé par un réseau de neurones, dans le cadre d'un apprentissage par renforcement, tel que notamment mis en œuvre selon la demande de brevet FR 2213738 au nom de la Demanderesse, ou lorsque l'exploration est mise en œuvre par un drone utilisant un algorithme non-appris d'exploration exhaustive de la zone géographique considérée. Les courbes 138 et 140 correspondent respectivement à leur dérivée.

Les seuils de taux d'exploration correspondent respectivement au point 142 pour le seuil de taux d'exploration dont la valeur est obtenue en utilisant l'axe des ordonnées de valeur de taux à gauche de la vue 132, et au point 144 pour la dérivée de ce taux dont la valeur est obtenue en utilisant l'axe des ordonnées de valeur dérivée à droite de la vue 132, l'axe des abscisses correspondant au nombres d'épisodes.

Ainsi, selon cette option de la présente invention, on considère que le groupe d'exploration est exploré lorsque le taux d'exploration est supérieur au seuil de taux d'exploration, et que la dérivée du taux t'exploration est inférieure au seuil de dérivée.

Le tableau ci-dessus correspond à des valeurs de seuils pour un drone contrôlé individuellement via un réseau de neurones, dans le cadre d'un apprentissage par renforcement, tel que notamment mis en œuvre selon la demande de brevet FR 2213738 au nom de la Demanderesse, le réseau de neurones étant convolutif CNN (de l'anglais *Convolutional Neural Networks*) et favorisant l'efficience par rapport à l'exhaustivité : l'exploration mise en œuvre par le drone est très rapide, mais laisse potentiellement non explorée une grande partie de pixels. Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel »* en référence à la dénomination anglaise correspondante, ou encore filtre, la convolution agissant tel un filtrage. Un réseau convolutif est propre à comporter plusieurs motifs ou « kernels » par couche.

| Densité de pixels | Seuil du Taux d'exploration | Seuil de dérivée du Taux d'exploration |
|---|---|---|
| 0 à 0,05 | 0,5 | 0,001 |
| 0,05 à 0,1 | 0,6 | 0,001 |
| 0,1 à 0,2 | 0,7 | 0,0005 |
| 0,2 à 0,3 | 0,8 | 0,0003 |
| 0,3 à 1,0 | 0,85 | 0,0002 |

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi, en combinaison avec le contrôle individuel des drones, dit bas-niveau, portant sur leur position géographique et l'orientation du capteur d'image embarqué, est réalisé par un réseau de neurones, dans le cadre d'un apprentissage par renforcement, tel que notamment mis en œuvre selon la demande de brevet FR 2213738 au nom de la Demanderesse, de fournir un contrôle haut-niveau de coordination de la pluralité de drones. On obtient donc un contrôle des drones de l'essaim de drones (i.e. de la pluralité de drones) à deux niveaux : bas-niveau de manière individuelle de la position et de la caméra (i.e. capteur d'images) de chaque drone, et haut-niveau pour les coordonner entre eux, permettant un passage à l'échelle c'est-à-dire ayant la capacité de calculs quasi-instantanés pour un grand nombre de point d'intérêts à observer.

Le contrôle haut-niveau proposé via le procédé 50 et le dispositif 10 selon la présente invention d'attribution de mission à chaque drone d'une pluralité de drones est avantageusement basé sur un partitionnement (i.e. clustering) d'un sous-ensemble du terrain associé à la mission, à savoir les seuls points d'intérêts à observer, suivi d'un mécanisme d'attribution partiel des groupes d'exploration (i.e. clusters) et enfin d'une détermination de parcours inter-cluster.

Un tel partitionnement (i.e. clustering) préalable, non impactant car mis en œuvre en préparation de mission, ou embarqué directement et pouvant être recalculé si la zone de mission change, permet la mise en œuvre de calculs quasi instantanés lors de l'inférence, en conséquence très rapide, d'un réseau de neurones du contrôleur bas niveau tel que notamment mis en œuvre selon la demande de brevet FR 2213738 au nom de la Demanderesse.

Le partitionnement (i.e. clustering) préalable permet en outre une résolution du problème du voyageur de commerce TSP raisonnable en le rendant de faible dimension par construction.

Cette rapidité de calculs autorise une adaptation permanente aux aléas de la mission, tels qu'un nombre variable de drones. En effet, il suffit de relancer les calculs du dispositif 10 (i.e. le contrôleur haut-niveau) au moment où le nombre de drone varie, tout en étant compatible avec une priorisation de l'espace à observer, et en évitant un échange d'information de synchronisation permanent entre les drones. La solution fonctionne également avec des synchronisations intermittentes car chaque drone est autonome dans son exploration glissante des groupes d'exploration (fenêtre glissante) qui lui sont attribués.

## Revendications

1. Procédé (50) d'attribution de mission à chaque drone d'une pluralité de drones contrôlés individuellement au moyen d'un réseau de neurones, chaque drone étant muni d'au moins un capteur d'image dont l'orientation et/ou le zoom est pilotable, la mission de la pluralité de drones étant d'explorer à distance une pluralité de points d'intérêt prédéterminés au sein d'une zone géographique prédéterminée, le procédé étant mis en œuvre par un dispositif électronique d'attribution de mission à chaque drone d'une pluralité de drones, le procédé comprenant:
- l'obtention (52) d'un modèle numérique du terrain associé à ladite zone géographique prédéterminée et de la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée;
et **caractérisé en ce qu'**il comprend les étapes suivantes :
- partitionnement (54) dudit sous-ensemble en groupes d'exploration regroupant des points d'intérêt voisins en étant espacés les uns des autres d'une distance inférieure à un seuil de distance prédéterminé, chaque groupe étant de taille sensiblement égale;
- en fonction de la position courante de chacun desdits drones, attribution (56) à chacun desdits drones d'une liste de groupe(s) d'exploration à parcourir, ladite liste comprenant au moins un desdits groupes d'exploration ;
- pour chacun desdits drones, détermination (58) d'un ordre de parcours desdits groupes d'exploration attribués lorsque ladite liste comprend au moins deux desdits groupes d'exploration dudit sous-ensemble partitionné ;
et les étapes suivantes mises en œuvre itérativement au cours de ladite mission jusqu'à ce que ledit sous-ensemble soit complètement exploré :
- suivi (60), en parallèle, de la position et du parcours de chacun desdits drones, jusqu'à détection, d'au moins un des évènements suivants:
- selon un critère prédéterminé, d'une suffisance d'exploration d'au moins un groupe d'exploration attribué courant ;
- changement d'une priorité d'exploration d'au moins un desdits points d'intérêt ;
- ajout ou suppression d'un drone à ladite pluralité;
- au moins après chaque détection, mise à jour (62) de la liste de groupe(s) d'exploration restant à parcourir attribuée à chaque drone en supprimant de ladite liste tout groupe d'exploration suffisamment exploré, ou
- lors d'un ajout ou d'une suppression de drone ou d'un changement de priorité d'exploration, réitération de l'ensemble des étapes à partir de l'étape de partitionnement (54) appliquée à la partie non explorée dudit sous-ensemble.

2. Procédé selon la revendication 1, dans lequel ledit partitionnement (54) dudit sous-ensemble en groupes d'exploration est un partitionnement en k-moyennes (70), le nombre optimal de groupes d'exploration étant déterminé en :
- testant en parallèle plusieurs valeurs du nombre de groupes d'exploration,
- en sommant, pour chaque valeur du nombre de groupes d'exploration, la surface de l'enveloppe convexe associée à chaque groupe d'exploration, le nombre optimal correspondant à la valeur fournissant la surface totale minimale.

3. Procédé selon la revendication 1, dans lequel ledit partitionnement (54) dudit sous-ensemble en groupes d'exploration est obtenu par tuilage par programmation linéaire (72).

4. Procédé selon la revendication 1, dans lequel ledit partitionnement (54) dudit sous-ensemble en groupes d'exploration est obtenu en appliquant (74) une heuristique de tuilage prédéterminée, chaque groupe d'exploration correspondant à une tuile dudit tuilage, l'application de ladite heuristique de tuilage comprenant les premières étapes suivantes :
- placement d'une première tuile de forme prédéterminée dans un coin arbitraire de ladite image, et
- obtention de la position définitive de ladite première tuile au sein de l'image par :
- décalage selon une première des directions de la grille bidimensionnelle tant qu'aucun pixel correspondant à un desdits points d'intérêt n'est en dehors de ladite première tuile, puis par
- décalage selon l'autre des directions de la grille bidimensionnelle tant qu'aucun pixel correspondant à un desdits points d'intérêt n'est en dehors de ladite première tuile ; les points d'intérêt couverts par la première tuile n'étant plus à prendre en compte pour la détermination de la position des tuiles suivantes ;
et, jusqu'à couverture de chacun des desdits points d'intérêt de ladite pluralité, la réitération des étapes suivantes :
- placement d'une autre tuile de ladite forme prédéterminée :
- directement à la suite de la tuile dont la position définitive a été précédemment obtenue selon ladite première direction, ou,
- selon ladite autre direction :
- au début de la ligne suivante celle de la tuile dont la position définitive a été précédemment obtenue, si ladite autre direction est horizontale, ou
- de la colonne suivante celle de la tuile dont la position définitive a été précédemment obtenue, si ladite autre direction est horizontale, et
- obtention de la position définitive de ladite autre tuile au sein de l'image par :
- décalage selon ladite première direction tant qu'aucun pixel correspondant à un desdits points d'intérêt n'est en dehors de ladite autre tuile, puis par
- décalage selon ladite autre direction tant qu'aucun pixel correspondant à un desdits points d'intérêt n'est en dehors de ladite autre tuile ;
les points d'intérêt couverts par ladite autre tuile n'étant plus à prendre en compte pour la détermination de la position des tuiles suivantes.

5. Procédé (50) selon l'une quelconque des revendications précédentes, dans lequel ledit procédé comprend en outre l'obtention (68) d'une priorité d'exploration d'au moins un desdits points d'intérêt, et sa prise en compte lors de ladite attribution, ladite attribution (56) comprenant l'ensemble (76) des sous-étapes suivantes :
- calcul de la surface de l'enveloppe convexe associée à chaque groupe d'exploration ;
- première attribution, à ladite pluralité de drones, de tous les groupes d'exploration comprenant au moins un point d'intérêt à explorer prioritairement et/ou du groupe d'exploration le plus proche ;
- détermination du drone ayant le moins de surface à explorer correspondant au drone dont la liste de groupe(s) d'exploration à parcourir présente la somme minimale des surfaces des enveloppes convexes desdits groupes d'exploration qui lui ont été attribués lors de ladite première attribution
- pour chaque groupe d'exploration non attribué dudit sous-ensemble partitionné, détermination d'un score comprenant :
- la détermination d'une première distance correspondant à la distance minimale dudit groupe d'exploration non attribué auxdits groupes d'exploration attribués audit drone ayant le moins de surface à explorer ;
- la détermination d'une deuxième distance correspondant à la distance minimale dudit groupe d'exploration non attribué auxdits groupes d'exploration attribués aux autres drones de ladite pluralité distincts dudit drone ayant le moins de surface à explorer ;
- la détermination du score correspondant à la différence entre lesdites première et deuxième distances ;
- jusqu'à ce que la somme des surfaces des enveloppes convexes desdits groupes d'exploration attribués à chaque drone soit sensiblement égale ou jusqu'à ce que tous lesdits groupes d'exploration issus du partitionnement soient attribués, deuxième attribution de groupes d'exploration non attribués lors de ladite première attribution, le drone ayant le moins de surface à explorer se voyant attribué le groupe d'exploration non attribués présentant le score le plus faible.

6. Procédé (50) selon l'une quelconque des revendications précédentes dans lequel la détermination (58) dudit ordre de parcours comprend l'optimisation de la distance de parcours débutant à la position courante dudit drone considéré et passant par l'intégralité desdits groupes d'exploration qui lui sont attribués en résolvant, au moyen d'un algorithme 3-opt, un problème correspondant sensiblement au problème du voyageur de commerce ou du voyageur de commerce multiple,
et en considérant un nombre limite prédéterminé de groupes d'exploration attribués, ledit ordre de parcours étant ré-optimisé via ledit algorithme 3-opt dès qu'un de ses groupes d'exploration attribué est suffisamment exploré, en ajoutant le groupe d'exploration attribué le plus proche du dernier des groupes d'exploration attribué appartenant au nombre limite prédéterminé de groupes d'exploration attribués lors de l'itération précédente de l'algorithme 3-opt.

7. Procédé selon l'une quelconque des revendications précédentes, dans lequel ladite mise à jour comprend en outre une réattribution desdits groupes d'exploration restant à parcourir lorsque la liste mise à jour d'au moins un desdits drones est vide, ladite réattribution correspondant au moins à l'attribution, audit drone dont la liste est vide, d'au moins un groupe d'exploration restant à parcourir attribué au drone ayant le plus de surface restante à explorer, ledit au moins un groupe d'exploration restant à parcourir réattribué étant le plus éloigné ou le dernier à visiter selon l'ordre de parcours dudit drone ayant le plus de surface restante à explorer.

8. Procédé (50) selon l'une quelconque des revendications précédentes 1 à 5 dans lequel, ladite attribution (56) comprend l'ensemble (78) des sous-étapes suivantes :
- calcul de l'enveloppe convexe de tous les groupes d'exploration dudit sous-ensemble partitionné ;
- pour chacun desdits drones :
- détermination du sommet de l'enveloppe convexe le plus proche dudit drone considéré ;
- détermination des groupes d'exploration dudit sous-ensemble partitionné les plus proches dudit sommet,
- parmi lesdits groupes d'exploration dudit sous-ensemble partitionné les plus proches dudit sommet, détermination dudit groupe d'exploration le plus proche dudit drone considéré ;
- attribution dudit groupe d'exploration le plus proche audit drone considéré.

9. Procédé selon l'une quelconque des revendications précédentes dans lequel ledit critère prédéterminé dépend, pour chaque groupe d'exploration, au moins des éléments suivants :
- la densité de pixels à explorer correspondant à la proportion de pixels à explorer, chaque pixel à explorer correspondant à un point d'intérêt à explorer, parmi l'ensemble des pixels constituant le groupe d'exploration courant ;
- le taux d'exploration correspondant à la proportion de pixels déjà explorés parmi l'ensemble des pixels à explorer du groupe d'exploration courant ;
- la dérivée du taux d'exploration ;
une pluralité de plages de densité de pixels distinctes étant définie, chaque plage de densité de pixels étant respectivement associée à un couple de seuils comprenant un seuil de taux d'exploration et à un seuil de dérivée dudit taux d'exploration ;
pour la plage de densité du groupe d'exploration courant, la suffisance d'exploration étant obtenue lorsque le taux d'exploration est supérieur audit seuil de taux d'exploration dudit couple associé à ladite plage de densité et lorsque le taux d'exploration est inférieur au seuil de dérivée dudit taux d'exploration.

10. Dispositif (10) électronique d'attribution de mission à chaque drone d'une pluralité de drones contrôlés individuellement au moyen d'un réseau de neurones, chaque drone étant muni d'au moins un capteur d'image dont l'orientation et/ou le zoom est pilotable, la mission de la pluralité de drone étant d'explorer à distance une pluralité de points d'intérêt prédéterminés au sein d'une zone géographique prédéterminée, le dispositif électronique d'attribution de mission à chaque drone d'une pluralité de drones comprenant au moins :
- un module d'obtention (12) configuré pour obtenir un modèle numérique du terrain associé à ladite zone géographique prédéterminée et la position de chacun desdits points d'intérêt de ladite pluralité au sein dudit modèle numérique de ladite zone géographique prédéterminée, lesdits points d'intérêt formant un sous-ensemble de ladite zone géographique prédéterminée, ledit modèle numérique étant une image de ladite zone géographique prédéterminée, ladite image comprenant un nombre prédéterminé de pixels répartis au sein de ladite image selon une grille bidimensionnelle prédéterminée ;
et **caractérisé en ce qu'**il comprend en outre :
- un module de partitionnement (14) configuré pour partitionner ledit sous-ensemble en groupes d'exploration regroupant des points d'intérêt voisins en étant espacés les uns des autres d'une distance inférieure à un seuil de distance prédéterminé, chaque groupe étant de taille sensiblement égale ;
- un module d'attribution (16) configuré pour allouer à chacun desdits drones une liste de groupe(s) d'exploration à parcourir en fonction de la position courante de chacun desdits drones, ladite liste comprenant au moins un desdits groupes d'exploration dudit sous-ensemble partitionné ;
- un module de détermination (18) configuré, pour chacun desdits drones, pour déterminer un ordre de parcours desdits groupes d'exploration attribués lorsque ladite liste comprend au moins deux desdits groupes d'exploration ;
et les modules suivants, mis en œuvre itérativement au cours de ladite mission jusqu'à ce que ledit sous-ensemble soit complètement exploré :
- un module de suivi (20) configuré pour suivre en parallèle la position et le parcours de chacun desdits drones, jusqu'à détection, d'au moins un des évènements suivants:
- selon un critère prédéterminé, d'une suffisance d'exploration d'au moins un groupe d'exploration attribué courant ;
- changement d'une priorité d'exploration d'au moins un desdits points d'intérêt ;
- ajout ou suppression d'un drone à ladite pluralité ;
- un module de mise à jour (22) configuré pour mettre à jour, au moins après chaque détection, la liste de groupe(s) d'exploration restant à parcourir attribuée à chaque drone en supprimant de ladite liste tout groupe d'exploration suffisamment exploré.

## Patentansprüche

1. Verfahren (50) zum Zuweisen einer Mission an jede Drohne einer Vielzahl von Drohnen, die mittels eines neuronalen Netzes individuell gesteuert werden, wobei jede Drohne mit mindestens einem Bildsensor versehen ist, dessen Ausrichtung und/oder Zoom steuerbar ist, wobei die Mission der Vielzahl von Drohnen darin besteht, aus der Ferne eine Vielzahl von vorbestimmten Punkten von Interesse innerhalb eines vorbestimmten geografischen Gebiets zu erkunden, wobei das Verfahren durch eine elektronische Vorrichtung zum Zuweisen einer Mission an jede Drohne einer Vielzahl von Drohnen implementiert wird, das Verfahren umfassend:
- Erlangen (52) eines digitalen Geländemodells, das mit dem vorbestimmten geografischen Gebiet und der Position von jedem der Vielzahl von Punkten von Interesse innerhalb dieses Modells assoziiert ist, wobei die Punkte von Interesse eine Teileinheit dieses vorbestimmten geografischen Gebiets bilden, das digitale Modell ein Bild dieses vorbestimmten geografischen Gebiets darstellt und dieses Bild eine vorbestimmte Anzahl von Pixeln umfasst, die innerhalb des Bilds gemäß einem vorbestimmten zweidimensionalen Raster verteilt sind;
und **dadurch gekennzeichnet, dass** es die folgenden Schritte umfasst:
- Aufteilen (54) der Teileinheit in Erkundungsgruppen, die benachbarte Punkte von Interesse gruppieren, wobei diese durch einen Abstand voneinander getrennt sind, der kleiner ist als ein vorbestimmter Abstandsschwellenwert, und jede Gruppe im Wesentlichen die gleiche Größe aufweist;
- abhängig von der aktuellen Position jeder der Drohnen, Zuweisen (56) einer Liste von zu durchsuchenden Erkundungsgruppe(n) an jede der Drohnen, wobei die Liste mindestens eine der Erkundungsgruppen umfasst;
- für jede der genannten Drohnen, Bestimmen (58) einer Durchlaufreihenfolge der zugewiesenen Erkundungsgruppen, wenn die Liste mindestens zwei der Erkundungsgruppen der aufgeteilten Teileinheit umfasst;
und die folgenden Schritte, die während der Mission iterativ durchgeführt werden, bis die Teileinheit vollständig erkundet ist:
- paralleles Verfolgen (60) der Position und der Flugbahn jeder der Drohnen bis zur Erkennung mindestens eines der folgenden Ereignisse:
- gemäß einem vorbestimmten Kriterium, einer ausreichenden Erkundung von mindestens einer aktuellen zugewiesenen Erkundungsgruppe;
- Ändern einer Erkundungspriorität von mindestens einem der Punkte von Interesse;
- Hinzufügen oder Entfernen einer Drohne aus der Vielzahl;
- zumindest nach jeder Erkennung, Aktualisieren (62) der Liste der noch zu durchsuchenden Erkundungsgruppe(n), die jeder Drohne zugewiesen ist, indem jede ausreichend erkundete Erkundungsgruppe aus dieser Liste entfernt wird, oder
- bei Hinzufügen oder Entfernen einer Drohne oder bei Ändern der Erkundungspriorität, Wiederholen aller Schritte ab dem Aufteilungsschritt (54), der auf den nicht erkundeten Teil der Teileinheit angewandt wird.

2. Verfahren nach Anspruch 1, wobei die Aufteilung (54) der Teileinheit in Erkundungsgruppen eine k-Mittelwert-Aufteilung (70) ist, wobei die optimale Anzahl von Erkundungsgruppen bestimmt wird durch:
- paralleles Testen mehrerer Werte der Anzahl von Erkundungsgruppen,
- Aufsummieren, für jeden Wert der Anzahl von Erkundungsgruppen, der konvexen Hüllfläche, die mit jeder Erkundungsgruppe assoziiert ist, wobei die optimale Anzahl dem Wert entspricht, der die minimale Gesamtfläche liefert.

3. Verfahren nach Anspruch 1, wobei die Aufteilung (54) der Teileinheit in Erkundungsgruppen durch Kachelung mittels linearer Programmierung (72) erlangt wird.

4. Verfahren nach Anspruch 1, wobei die Aufteilung (54) der Teileinheit in Erkundungsgruppen durch Anwenden (74) einer vorbestimmten Kachelheuristik erfolgt, wobei jede Erkundungsgruppe einer Kachel dieser Kachelung entspricht, die Anwendung der Kachelheuristik umfassend die folgenden ersten Schritte:
- Platzieren einer ersten Kachel mit vorgegebener Form in einer beliebigen Ecke des Bilds und
- Erlangen der endgültigen Position der ersten Kachel in dem Bild durch:
- Verschieben gemäß einer ersten der Richtungen des zweidimensionalen Rasters, solange kein Pixel, das einem der Punkte von Interesse entspricht, außerhalb der ersten Kachel ist, und dann durch
- Verschieben in die andere Richtung des zweidimensionalen Rasters, solange kein Pixel, das einem der genannten Punkte von Interesse entspricht, außerhalb der ersten Kachel ist; wobei die durch die erste Kachel abgedeckten Punkte von Interesse bei der Bestimmung der Position der folgenden Kacheln nicht mehr zu berücksichtigen sind;
und bis zur Abdeckung jedes der genannten Punkte von Interesse der Vielzahl, Wiederholen der folgenden Schritte:
- Platzierung einer weiteren Kachel der vorbestimmten Form:
- direkt nach der Kachel, deren endgültige Position zuvor gemäß der ersten Richtung erlangt wurde, oder,
- gemäß der anderen Richtung:
- am Anfang der Reihe, die auf diejenige der Kachel folgt, deren endgültige Position zuvor erlangt wurde, wenn die andere Richtung horizontal ist, oder
- der Spalte, die der Kachel folgt, deren endgültige Position zuvor erlangt wurde, wenn die andere Richtung horizontal ist, und
- Erlangen der endgültigen Position der anderen Kachel in dem Bild durch:
- Verschieben in der ersten Richtung, solange kein Pixel, das einem der Punkte von Interesse entspricht, außerhalb der anderen Kachel ist, und dann durch
- Verschieben in die andere Richtung, solange kein Pixel, der einem der Punkte von Interesse entspricht, außerhalb der anderen Kachel ist;
wobei die von der anderen Kachel abgedeckten Punkte von Interesse für die Bestimmung der Position der folgenden Kacheln nicht mehr berücksichtigt werden.

5. Verfahren (50) nach einem der vorherigen Ansprüche, wobei das Verfahren ferner das Erlangen (68) einer Erkundungspriorität für mindestens einen der Punkte von Interesse und deren Berücksichtigung bei der Zuweisung umfasst, die Zuweisung (56) umfassend die Gesamtheit (76) der folgenden Teilschritte:
- Berechnen der konvexen Hüllfläche, die mit jeder Erkundungsgruppe assoziiert ist;
- erstes Zuweisen, an die Vielzahl von Drohnen, aller Erkundungsgruppen, die mindestens einen vorrangig zu erkundenden Punkt von Interesse umfassen, und/oder der nächstgelegenen Erkundungsgruppe;
- Bestimmen der Drohne mit der geringsten zu erkundenden Fläche, die der Drohne entspricht, deren Liste der zu durchlaufenden Erkundungsgruppen die minimale Summe der konvexen Hüllflächen dieser Gruppen aufweist und die ihr bei der ersten Zuweisung zugewiesen wurden
- für jede nicht zugewiesene Erkundungsgruppe dieser aufgeteilten Teileinheit, Bestimmen einer Punktzahl, umfassend:
- Bestimmen eines ersten Abstands, der dem Mindestabstand der nicht zugewiesenen Erkundungsgruppe zu den Erkundungsgruppen entspricht, die der Drohne mit der geringsten zu erkundenden Fläche zugewiesen wurden;
- Bestimmen eines zweiten Abstands, der dem minimalen Abstand der nicht zugewiesenen Erkundungsgruppe zu den Erkundungsgruppen entspricht, die den anderen Drohnen der Vielzahl zugewiesen sind, die von der Drohne mit der geringsten zu erkundenden Fläche verschieden sind;
- Bestimmen der Punktzahl, die der Differenz zwischen dem ersten und dem zweiten Abstand entspricht;
- bis die Summe der konvexen Hüllflächen der den einzelnen Drohnen zugewiesenen Erkundungsgruppen im Wesentlichen gleich ist oder bis alle Erkundungsgruppen aus der Aufteilung zugewiesen sind, zweites Zuweisen von Erkundungsgruppen, die bei der ersten Zuweisung nicht zugewiesen wurden, wobei der Drohne mit der geringsten zu erkundenden Fläche die nicht zugewiesene Erkundungsgruppe mit der niedrigsten Punktzahl zugewiesen wird.

6. Verfahren (50) nach einem der vorherigen Ansprüche, wobei das Bestimmen (58) der Durchlaufreihenfolge die Optimierung des Routenabstands umfasst, die an der aktuellen Position der betrachteten Drohne beginnt und durch alle ihr zugewiesenen Erkundungsgruppen verläuft, indem mittels eines 3-opt-Algorithmus ein Problem gelöst wird, das im Wesentlichen dem Problem des Handelsreisenden oder des Mehrfach-Handelsreisenden entspricht,
und unter Berücksichtigung einer vorbestimmten Grenzzahl von zugewiesenen Erkundungsgruppen, wobei die Durchlaufreihenfolge über den 3-opt-Algorithmus neu optimiert wird, sobald eine seiner zugewiesenen Erkundungsgruppen ausreichend exploriert ist, indem die zugewiesene Erkundungsgruppe, die der letzten der zugewiesenen Erkundungsgruppen, die zu der vorbestimmten Grenzzahl von zugewiesenen Erkundungsgruppen gehören, am nächsten ist, in der vorherigen Iteration des 3-opt-Algorithmus hinzugefügt wird.

7. Verfahren nach einem der vorherigen Ansprüche, wobei die Aktualisierung ferner eine Neuzuweisung der noch zu durchsuchenden Erkundungsgruppen umfasst, wenn die aktualisierte Liste von mindestens einer der Drohnen leer ist, wobei die Neuzuweisung mindestens der Zuweisung der Drohne, deren Liste leer ist, von mindestens einer noch zu durchsuchenden Erkundungsgruppe entspricht, die der Drohne mit der größten noch zu erkundenden Restfläche zugewiesen wurde, wobei die mindestens eine neu zugewiesene, noch zu durchsuchende Erkundungsgruppe die am weitesten entfernte oder die letzte zu besuchende ist, je nach der Durchlaufreihenfolge, in der die Drohne mit der größten noch zu erkundenden Fläche unterwegs ist.

8. Verfahren (50) nach einem der vorherigen Ansprüche 1 bis 5, wobei die Zuweisung (56) die Gesamtheit (78) der folgenden Teilschritte umfasst:
- Berechnen der konvexen Hülle aller Erkundungsgruppen der aufgeteilten Teileinheit;
- Für jede der Drohnen:
- Bestimmen des Scheitelpunkts der konvexen Hülle, der der betrachteten Drohne am nächsten ist;
- Bestimmen der Erkundungsgruppen der aufgeteilten Teileinheit, die dem Scheitelpunkt am nächsten sind,
- unter den Erkundungsgruppen der aufgeteilten Teileinheit, die dem Scheitelpunkt am nächsten sind, Bestimmen der Erkundungsgruppe, die der betrachteten Drohne am nächsten ist;
- Zuweisen der nächstgelegenen Erkundungsgruppe an die betrachtete Drohne.

9. Verfahren nach einem der vorherigen Ansprüche, wobei das vorbestimmte Kriterium für jede Erkundungsgruppe zumindest von den folgenden Elementen abhängt:
- der Dichte der zu erkundenden Pixel, die dem Anteil der zu erkundenden Pixel entspricht, wobei jedes Pixel einem Punkt von Interesse aus der Gesamtheit von Pixeln entspricht, die die aktuelle Erkundungsgruppe bilden;
- die Erkundungsrate, die dem Anteil der bereits erkundeten Pixel an allen zu erkundenden Pixeln der aktuellen Erkundungsgruppe entspricht;
- die Ableitung der Erkundungsrate;
wobei eine Vielzahl unterschiedlicher Pixeldichtebereiche definiert wird, jeder Pixeldichtebereich mit einem Schwellenwertpaar assoziiert ist, das einen Schwellenwert für die Erkundungsrate und eine für die Ableitung dieser Rate umfasst;
für den Dichtebereich der aktuellen Erkundungsgruppe wird die Erkundung als ausreichend angesehen, wenn die Erkundungsrate den Schwellenwert des mit dem Dichtebereich assoziierten Paars übersteigt und wenn die Erkundungsrate unter dem Schwellenwert der Ableitung dieser Erkundungsrate ist.

10. Elektronische Vorrichtung (10) zum Zuweisen einer Mission an jede Drohne einer Vielzahl von Drohnen, die mittels eines neuronalen Netzes individuell gesteuert werden, wobei jede Drohne mit mindestens einem Bildsensor versehen ist, dessen Ausrichtung und/oder Zoom steuerbar ist, wobei die Mission der Vielzahl von Drohnen darin besteht, aus der Ferne eine Vielzahl von vorbestimmten Punkten von Interesse innerhalb eines vorbestimmten geografischen Gebiets zu erkunden, wobei die elektronische Vorrichtung zum Zuweisen einer Mission an jede Drohne einer Vielzahl von Drohnen implementiert wird, mindestens umfassend:
- ein Erlangungsmodul (12), das konfiguriert ist, um ein digitales Geländemodell des Gebiets zu erlangen, das mit dem vorbestimmten geografischen Gebiet und der Position von jedem der Vielzahl von Punkten von Interesse innerhalb dieses Modells assoziiert ist, wobei die Punkte von Interesse eine Teileinheit dieses vorbestimmten geografischen Gebiet bilden, das digitale Modell ein Bild dieses vorbestimmten geografischen Gebiets darstellt und dieses Bild eine vorbestimmte Anzahl von Pixeln umfasst, die innerhalb des Bilds in einem vorbestimmten zweidimensionalen Raster verteilt sind;
und **dadurch gekennzeichnet, dass** es ferner Folgendes umfasst:
- ein Aufteilungsmodul (14), das konfiguriert ist, um die Teileinheit in Erkundungsgruppen aufzuteilen, die benachbarte Punkte von Interesse gruppieren, wobei diese durch einen Abstand voneinander getrennt sind, der kleiner ist als ein vorbestimmter Abstandsschwellenwert, und jede Gruppe im Wesentlichen die gleiche Größe aufweist;
- ein Zuweisungsmodul (16), das konfiguriert ist, um jeder der Drohnen eine Liste von Erkundungsgruppen zuzuweisen, die abhängig von der aktuellen Position jeder der Drohnen durchlaufen werden sollen, wobei die Liste mindestens eine der Erkundungsgruppen der aufgeteilten Teileinheit enthält;
- ein Bestimmungsmodul (18), das für jede der Drohnen konfiguriert ist, um eine Durchlaufreihenfolge der zugewiesenen Erkundungsgruppen zu bestimmen, wenn die Liste mindestens zwei dieser Erkundungsgruppen umfasst;
und die folgenden Module, die während der Mission iterativ implementiert werden, bis die Teileinheit vollständig erkundet ist:
- ein Verfolgungsmodul (20), das konfiguriert ist, um parallel Position und Flugbahn jeder dieser Drohnen bis zur Erkennung mindestens eines der folgenden Ereignisse zu überwachen:
- gemäß einem vorbestimmten Kriterium, einer ausreichenden Erkundung von mindestens einer aktuellen zugewiesenen Erkundungsgruppe;
- Ändern einer Erkundungspriorität von mindestens einem der Punkte von Interesse;
- Hinzufügen oder Entfernen einer Drohne aus der Vielzahl;
- ein Aktualisierungsmodul (22), das konfiguriert ist, um zumindest nach jeder Erfassung die jeder Drohne zugewiesene Liste der noch zu durchsuchenden Gruppen zu aktualisieren, indem es jede ausreichend erkundete Gruppe aus dieser Liste entfernt.

## Claims

1. A method (50) for assigning a mission to each of a plurality of drones individually controlled by means of a neural network, each drone being provided with at least one image sensor the orientation and/or zoom of which is controllable, the mission of the plurality of drones being to remotely scan a plurality of predetermined points of interest within a predetermined geographical zone, the method being implemented by an electronic device for assigning a mission to each drone of a plurality of drones, the method comprising:
- the obtaining (52) a digital model of the terrain associated with said predetermined geographical zone and the position of each of said points of interest of said plurality within said digital model of said predetermined geographical zone, said points of interest forming a subset of said predetermined geographical zone, said digital model being an image of said predetermined geographical zone, said image comprising a predetermined number of pixels distributed within said image according to a predetermined two-dimensional grid; and **characterized in that** it comprises the following steps:
- partitioning (54) said subset into scanning groups grouping neighboring points of interest spaced apart from each other by a distance less than a predetermined distance threshold, each group being substantially equal in size;
- depending on the current position of each of said drones, assigning (56) to each of said drones of a list of scanning group(s) to be traveled over, said list comprising at least one of said scanning groups;
- for each of said drones, determination (58) of an order of travel of said assigned scanning groups when said list comprises at least two of said scanning groups of said partitioned subset;
and the following steps iteratively implemented during said mission until said subset is fully scanned:
- monitoring (60), in parallel, of the position and of the course of each of said drones, until detection, of at least one of the following events:
- according to a predetermined criterion, a scanning sufficiency of at least one current assigned scanning group;
- change of a scanning priority of at least one of said points of interest;
- addition or removal of a drone to/from said plurality;
- at least after each detection, updating (62) of the list of scanning group(s) which are still to be traveled over, assigned to each drone by deleting from the list any sufficiently scanned scanning group, or
- during a drone addition or removal or a change of scanning priority, reiteration of all the steps from the partitioning step (54) applied to the unscanned part of said subset.

2. The method of claim 1, wherein said partitioning (54) of said subset into scanning groups is a partitioning into k-means (70), the optimal number of scanning groups being determined by:
- testing in parallel a plurality of values of the number of scanning groups,
- by summing, for each value of the number of scanning groups, the surface area of the convex envelope associated with each scanning group, the optimal number corresponding to the value providing the minimum total surface area.

3. The method according to claim 1, wherein said partitioning (54) of said subset into scanning groups is achieved by linear programming tiling (72).

4. The method according to claim 1, wherein said partitioning (54) of said subset into scanning groups is obtained by applying (74) a predetermined tile heuristic, each scanning group corresponding to a tile of said tiling, the application of said tiling heuristic comprising the first steps of:
- placing a first tile of predetermined shape in an arbitrary corner of said image, and
- obtaining the final position of said first tile within the image by:
- shifting along a first of the directions of the two-dimensional grid as long as no pixel corresponding to one of said points of interest is outside said first tile, then by
- shifting along the other direction of the two-dimensional grid as long as no pixel corresponding to one of said points of interest is outside said first tile;
the points of interest covered by the first tile are no longer to be taken into account when determining the position of the following tiles;
and, until each of said points of interest of said plurality are covered, the reiteration of the following steps:
- placement of another tile of said predetermined shape:
- directly following the tile the final position of which has previously been obtained along said first direction, or,
- according to said other direction:
- at the beginning of the row following the row of the tile the final position of which was previously obtained, if said other direction is horizontal, or
- the column following the column of the tile the final position of which has been previously obtained, if said other direction is horizontal, and
- obtaining the final position of said other tile within the image by:
- shifting along said first direction as long as no pixel corresponding to one of said points of interest is outside said other tile, then by
- shifting along said other direction as long as no pixel corresponding to one of said points of interest is outside said other tile;
the points of interest covered by said other tile no longer being taken into account for the determination of the position of the following tiles.

5. The method (50) according to any of the preceding claims, wherein said method further comprises obtaining (68) a priority to scan at least one of said points of interest, and the taking into account thereof during said assigning,
the assigning (56) comprising the set (76) of the following sub-steps:
- calculation of the surface area of the convex envelope associated with each scanning group;
- first assigning, to said plurality of drones, of all scanning groups comprising at least one point of interest to be scanned in priority and/or of the nearest scanning group;
- determination of the drone having the least surface area to scan corresponding to the drone whose list of scanning group(s) to travel over presents the minimum sum of the surface areas of the convex envelopes of said scanning groups which were assigned thereto during said first assigning;
- for each unassigned scanning group of said partitioned subset, determination of a score comprising:
- the determination of a first distance corresponding to the minimum distance of said scanning group not assigned to said scanning groups assigned to said drone having the least surface area to scan;
- the determination of a second distance corresponding to the minimum distance of said scanning group not assigned to said scanning groups assigned to the other drones of said plurality, distinct from said drone having the least surface area to scan;
- the determination of the score corresponding to the difference between said first and second distances;
- until the sum of the surface areas of the convex envelopes of said scanning groups assigned to each drone is substantially equal or until all said scanning groups resulting from the partitioning are assigned, second assignment of scanning groups not assigned during said first assignment, the drone having the least surface area to be scanned being assigned the unassigned scanning group having the lowest score.

6. A method (50) according to any preceding claim, wherein determining (58) said order of travel comprises optimizing the travel distance starting at the current position of said drone under consideration and passing through all of said scanning groups assigned thereto by solving, by means of a 3-opt algorithm, a problem substantially corresponding to the travelling salesman or multiple travelling salesman problem,
and considering a predetermined limit number of assigned scanning groups, said order of travel being re-optimized via said 3-opt algorithm as soon as one of the assigned scanning groups thereof is sufficiently scanned, by adding the assigned scanning group closest to the last of the assigned scanning groups belonging to the predetermined limit number of scanning groups assigned during the previous iteration of the 3-opt algorithm.

7. The method according to any of the preceding claims, wherein said updating further comprises a reassigning of said scanning groups remaining to be traveled when the updated list of at least one of said drones is empty, said reassigning corresponding at least to the assigning, to said drone the list of which is empty, at least one scanning group remaining to be traveled over, assigned to the drone having the most remaining surface area to be scanned, said at least one scanning group remaining to be traveled over being the furthest away or the last to be visited according to the order of travel of said drone having the most remaining surface area to be scanned.

8. The method (50) according to any of the preceding claims 1 to 5, wherein the said assigning (56) comprises the set (78) of the following sub-steps:
- calculation of the convex envelope of all scanning groups of said partitioned subset;
- for each of said drones:
- determination of the vertex of the convex envelope closest to said drone considered;
- determination of the scanning groups of said partitioned subset closest to said vertex,
- among said scanning groups of said partitioned subset closest to said vertex, determination of said scanning group closest to said drone considered;
- assigning of said scanning group closest to said drone considered.

9. The method according to any of the preceding claims wherein said predetermined criterion depends, for each scanning group, on at least the following elements:
- the density of pixels to be scanned corresponding to the proportion of pixels to be scanned, each pixel to be scanned corresponding to a point of interest to be scanned, among the set of pixels forming the current scanning group;
- the scanning rate corresponding to the proportion of pixels already scanned among the set of pixels to be scanned of the current scanning group;
- the derivative of the scanning rate;
a plurality of distinct pixel density ranges being defined, each pixel density range being correspondingly associated with a pair of thresholds comprising a scanning rate threshold and a derivative threshold of said scanning rate;
for the density range of the current scanning group, the scanning sufficiency being obtained when the scanning rate is greater than said scanning rate threshold of said pair associated with said density range and when the scanning rate is less than the derivative threshold of said scanning rate.

10. An electronic device (10) for assigning a mission to each drone of a plurality of drones individually controlled by means of a neural network, each drone being provided with at least one image sensor the orientation and/or zoom of which is controllable, the mission of the plurality of drones being to remotely scan a plurality of predetermined points of interest within a predetermined geographical zone, the electronic device for assigning a mission to each drone of a plurality of drones comprising at least:
- an obtaining module (12) configured to obtain a digital model of the terrain associated with said predetermined geographical zone and the position of each of said points of interest of said plurality within said digital model of said predetermined geographical zone, said points of interest forming a subset of said predetermined geographical zone, said digital model being an image of said predetermined geographical zone, said image comprising a predetermined number of pixels distributed within said image according to a predetermined two-dimensional grid;
and **characterized in that** it further comprises:
- a partitioning module (14) configured to partition said subset into scanning groups grouping neighboring points of interest spaced apart from each other by a distance less than a predetermined distance threshold, each group being substantially equal in size;
- an assigning module (16) configured to allocate to each of said drones a list of scanning group(s) to be traveled according to the current position of each of said drones, said list comprising at least one of said scanning groups of said partitioned subset;
- a determination module (18) configured, for each of said drones, to determine an order of travel of said assigned scanning groups when said list comprises at least two of said scanning groups;
and the following modules, implemented iteratively during said mission until said subset is fully scanned:
- a monitoring module (20) configured to monitor in parallel the position and travel of each of said drones, until detection of at least one of the following events:
- according to a predetermined criterion, a scanning sufficiency of at least one current assigned scanning group;
- change of a scanning priority of at least one of said points of interest;
- addition or removal of a drone to/from said plurality;
- an update module (22) configured to update, at least after each detection, the list of scanning group(s) remaining to be traveled over, assigned to each drone by deleting from said list any sufficiently scanned scanning group.
